# EUROPEAN PATENT APPLICATION

(11) **EP 4 447 576 A1**
(43) Date of publication of application: **16.10.2024**
(21) Application number: 22914078.5
(22) Date of filing: 06.12.2022
(51) Int. Cl.: H04W 68/00, H04W 74/00, H04W 48/08

(54) **COMMUNICATION METHOD AND APPARATUS**

(30) Priority: 30.12.2021 CN 202111655298
(71) Applicant: Huawei Technologies Co., Ltd., Shenzhen, Guangdong 518129 (CN)
(72) Inventor: XIANG, Hongyu, Shenzhen, Guangdong 518129 (CN); CHEN, Lei, Shenzhen, Guangdong 518129 (CN); LI, Bingzhao, Shenzhen, Guangdong 518129 (CN); LI, Chenwan, Shenzhen, Guangdong 518129 (CN)
(74) Representative: Gill Jennings & Every LLP
(86) International application number: PCT/CN2022/136862
(87) International publication number: WO 2023/124823

(57) **Abstract**

This application provides a communication method and apparatus, which are applicable to a system information update scenario. The method includes: An access network device determines that first information from a terminal device is not received in a first BWP. The access network device sends updated system information to the terminal device in the first BWP in response to that the first information is not received. The first BWP is an active BWP for the terminal device, and the first BWP does not include common search space CSS used to transmit a system information block SIB. According to the foregoing method, the access network device may learn that the terminal device fails to receive a system information update indication. Therefore, the access network device sends the updated system information to the terminal device. Communication quality is improved.

## Description

### TECHNICAL FIELD

This application relates to the field of communication technologies, and in particular, to a communication method and apparatus.

### BACKGROUND

The concept of a bandwidth part (bandwidth part, BWP) is introduced into a new radio (new radio, NR) system. The BWP is a segment of contiguous frequency resources on a carrier. One or more BWPs in one serving cell may be configured for one terminal device, but the terminal device transmits data over only an active BWP. The terminal device may implement downlink synchronization with a cell through cell search and obtain system information of the cell; and access a BWP in the cell based on a cell configuration and communicate with a base station in the BWP.

When the system information changes, the base station sends, to the terminal device, a system information update indication via downlink control information (downlink control information, DCI) for scheduling a paging message, where the system information update indication is used to notify the terminal device to receive updated system information. If the terminal device fails to receive the system information update indication, the terminal device may fail to receive the updated system information. Consequently, subsequent service transmission or cell re-selection is affected, and communication quality deteriorates. For example, when the terminal device performs random access, the terminal device may fail to receive the system information update indication from the base station. In this case, the terminal device cannot learn that the system information has changed, and misses the updated system information. Consequently, the communication quality deteriorates.

### SUMMARY

An objective of this application is to provide a communication method and apparatus, to improve communication quality of a terminal device.

According to a first aspect, this application provides a communication method. The method is performed by an access network device or a chip or a module in the access network device. Herein, an example in which the access network device is an execution body is used for description. The method includes: The access network device determines that first information from a terminal device is not received in a first bandwidth part (BWP), where the first BWP is an active BWP for the terminal device, the first BWP does not include common search space (CSS) used to transmit a system information block (SIB), and the first information is information associated with system information update. The access network device sends updated system information to the terminal device in the first BWP in response to that the first information is not received. In other words, if the access network device fails to receive, from the terminal device in the BWP, the information associated with the system information update, the access network device sends the updated system information to the terminal device in the BWP. The method is applicable to a system information update scenario.

According to the foregoing method, the access network device may determine, based on whether the first information from the terminal device is received, whether the terminal device has received a system information update indication (or a public warning system indication), where the first information is information associated with the system information update. When the first information from the terminal device is not received, the access network device may determine that the terminal device has not received the system information update indication, and may send the updated system information to the terminal device in the first BWP. The first BWP is the active BWP for the terminal device, and the first BWP does not include the CSS for the SIB. Therefore, when the system information is updated, the access network device may determine terminal devices that fail to receive the system information update indication (or the public warning system indication) or the updated system information in the first BWP, and provide services for the terminal devices in a timely manner. In this way, the terminal devices do not miss the updated system information, to avoid deterioration of communication quality. User experience is improved.

In a possible implementation, the method further includes: The access network device sends the system information update indication (or the public warning system indication) in a second BWP within a first modification period (MP), where the second BWP includes the CSS used to transmit the SIB. That the access network device determines that first information from a terminal device is not received in a first BWP includes: The access network device determines that the first information is not received within the first MP and/or a second MP, where the second MP is an MP following the first MP. That the access network device sends updated system information to the terminal device in the first BWP includes: The access network device sends the updated system information to the terminal device in the first BWP within the second MP. Alternatively, the second BWP may be replaced with a CORESET 0.

In a possible implementation, the first information indicates that the terminal device has received the system information update indication (or the public warning system indication), the first information indicates that the terminal device does not need to receive the updated system information, the first information indicates that the terminal device has updated the system information, or the first information indicates that the terminal device has received the updated system information. In other words, the first information may indicate a receiving status of the system information update indication (or the public warning system indication) of the terminal device, or may indicate a receiving status of the updated system information. Further, the access network device may determine, based on the first information, whether the updated system information needs to be sent to the terminal device.

In a possible implementation, the method further includes: The access network device receives a radio resource control RRC establishment completion message or an RRC resumption completion message from the terminal device in the first BWP. That the access network device determines that first information from a terminal device is not received in a first BWP includes: determining that the RRC establishment completion message or the RRC resumption completion message does not include the first information. In other words, it may be agreed in advance that the first information is carried in the RRC establishment completion message or the RRC resumption completion message. In this case, after receiving the RRC establishment completion message or the RRC resumption completion message, the access network device may determine whether the first information is included. Further, the access network device may determine, based on the first information, whether the updated system information needs to be sent to the terminal device, to improve communication quality of the terminal device.

In a possible implementation, that the access network device sends updated system information to the terminal device in the first BWP includes: The access network device sends the updated system information to the terminal device in the first BWP via dedicated signaling, or the access network device sends switching indication information to the terminal device in the first BWP, to indicate the terminal device to receive the updated system information in the second BWP, where the second BWP may be the CORESET 0. The terminal device may receive the updated system information faster via the dedicated signaling, and communication efficiency and user experience are improved. The system information can be sent to a plurality of terminal devices in the second BWP via the switching indication information, to improve resource utilization.

In a possible implementation, that the access network device sends updated system information to the terminal device in the first BWP in response to that the first information is not received includes: The access network device sends a system information block 1 (SIB1) to the terminal device in the first BWP in response to that the first information is not received, where the SIB 1 includes version information of the updated system information. The access network device receives a first request message from the terminal device, where the first request message is used to request the updated system information. The access network device sends the updated system information to the terminal device in the first BWP in response to the first request message. Based on the version information and the first request information, the terminal device may determine and feed back, depending on a service requirement, the receiving status of the system information update indication (the public warning system indication, or the updated system information), and the access network device may select the terminal devices that need to receive the updated system information in the first BWP, to send the updated system information to the terminal devices, without wasting additional transmission resources.

In a possible implementation, the terminal device is a reduced capability terminal device (RedCap UE). A bandwidth capability of the RedCap UE is small. Therefore, the access network device may separately configure a first BWP for the RedCap UE for communication. The first BWP may not include the SIB CSS and/or paging CSS. According to the communication method provided in this application, the updated system information can be sent to this type of terminal devices in a timely manner, to ensure normal communication of the terminal devices.

According to a second aspect, this application provides a communication method. The method is performed by a terminal device or a chip or a module in the terminal device. Herein, an example in which the terminal device is an execution body is used for description. The method includes: The terminal device determines whether a system information update indication is received. If the terminal device fails to receive the system information update indication, a first message that does not include first information is sent to an access network device, where the first message that does not include the first information is used to trigger sending of updated system information in a first BWP. The terminal device receives the updated system information from the access network device in the first BWP, where the first BWP is an active BWP for the terminal device, the first BWP does not include common search space CSS used to transmit a system information block SIB, and the first information is information associated with system information update. In other words, the terminal device feeds back, to the access network device, the first information indicating that the system information update indication is received, so that the access network device may determine terminal devices that fail to receive the system information update indication, and send the updated system information to the terminal devices in a timely manner. The method is applicable to a system information update scenario.

According to the foregoing method, the terminal device may indicate, to the access network device, via the first information, whether the terminal device has received the system information indication (or the public warning system indication) or whether the terminal device has received the updated system information. The active BWP for the terminal device is the first BWP, and the first BWP does not include the CSS for the SIB. Therefore, when the system information is updated, if the terminal device successfully receives the system information update indication (or the public warning system indication), the terminal device may send the first information to the access network device, or if the terminal device fails to receive the system information update indication (or the public warning system indication), the terminal device does not send the first information to the access network device, so that the access network device determines terminal devices that fail to receive the system information indication (or the public warning system indication) or that fail to receive the updated system information, to provide services for the terminal devices in a timely manner. In this way, the terminal devices do not miss the updated system information, to avoid deterioration of communication quality. User experience is improved.

In a possible implementation, the method further includes: If the terminal device has received the system information update indication, first information is sent to the access network device. In addition, in the method, "if the terminal device fails to receive the system information update indication, a first message that does not include first information is sent to an access network device" may alternatively be replaced with "if the terminal device has received the system information update indication, first information is sent to the access network device". In other words, the terminal device that has received the system information update indication or has received the updated system information may send the first information to the access network device, to indicate that the access network device does not need to additionally send the updated system information to the terminal device. According to this method, the access network device may determine receiving statuses of the system information update indication or the updated system information of a plurality of terminal device, to send the updated system information to a terminal device in need in a timely manner. Communication quality is improved.

In a possible implementation, the method further includes: The terminal device initiates random access in the first BWP. That the terminal device determines whether a system information update indication is received includes: determining whether the system information update indication is received in a random access procedure. In other words, the first information may indicate whether the terminal device has received the system information indication (or the public warning system indication) or whether the terminal device has received the updated system information in the random access procedure, so that the access network device sends the updated system information in a timely manner. In this way, the terminal device does not miss reception of the updated system information in the random access procedure. User experience is improved.

In a possible implementation, that the terminal device determines whether a system information update indication is received includes: The terminal device determines whether the system information update indication is received within a first MP. That a first message that does not include first information is sent to an access network device includes: The first message that does not include the first information is sent to the access network device within the first MP or a second MP, where the second MP is an MP following the first MP. That the terminal device receives the updated system information from the access network device in the first BWP includes: The terminal device receives the updated system information from the access network device in the first BWP within the second MP. Alternatively, the second BWP may be replaced with a CORESET 0.

In a possible implementation, the first information indicates that the terminal device has received the system information update indication (or the public warning system indication), the first information indicates that the terminal device does not need to receive the updated system information, the first information indicates that the terminal device has updated the system information, or the first information indicates that the terminal device has received the updated system information. In other words, the first information may indicate a receiving status of the system information update indication (or the public warning system indication) of the terminal device, or may indicate a receiving status of the updated system information. Further, the access network device may determine, based on the first information, whether the updated system information needs to be sent to the terminal device.

In a possible implementation, the first message is an RRC establishment completion message or an RRC resumption completion message. In other words, it may be agreed in advance that the first information is carried in the RRC establishment completion message or the RRC resumption completion message. In this case, after receiving the RRC establishment completion message or the RRC resumption completion message, the access network device may determine whether the first information is included. Further, the access network device may determine, based on the first information, whether the updated system information needs to be sent to the terminal device, to improve communication quality of the terminal device.

In a possible implementation, that the terminal device receives the updated system information from the access network device in the first BWP includes: The terminal device receives the updated system information from the access network device in the first BWP via dedicated signaling, or the terminal device receives switching indication information from the access network device in the first BWP, where the switching indication information indicates the terminal device to receive the updated system information in the second BWP, and the second BWP may be the CORESET 0. The terminal device may receive the updated system information faster via the dedicated signaling, and communication efficiency and user experience are improved. The system information can be sent to a plurality of terminal devices in the second BWP via the switching indication information, to improve resource utilization.

In a possible implementation, that the terminal device receives the updated system information from the access network device in the first BWP includes: The terminal device receives a system information block 1 (SIB 1) from the access network device in the first BWP, where the SIB 1 includes version information of the updated system information. The terminal device sends a first request message to the access network device based on the version information of the updated system information, where the first request message is used to request the updated system information. The terminal device receives the updated system information from the access network device in the first BWP. Based on the version information and the first request information, the terminal device may determine and feed back, depending on a service requirement, the receiving status of the system information update indication (the public warning system indication, or the updated system information), and the access network device may select the terminal devices that need to receive the updated system information in the first BWP, to send the updated system information to the terminal devices, without wasting additional transmission resources.

In a possible implementation, the terminal device is a reduced capability terminal device (RedCap UE). A bandwidth capability of the RedCap UE is small. Therefore, the access network device may separately configure a first BWP for the RedCap UE for communication. The first BWP may not include the SIB CSS and/or paging CSS. According to the communication method provided in this application, the updated system information can be sent to this type of terminal devices in a timely manner, to ensure normal communication of the terminal devices.

According to a third aspect, this application provides a communication method. The method is performed by an access network device or a chip or a module in the access network device. Herein, an example in which the access network device is an execution body is used for description. The method includes: The access network device receives first information from a terminal device in a first BWP, where the first BWP is an active BWP for the terminal device, the first BWP does not include common search space CSS used to transmit a system information block SIB, and the first information indicates that a system information update indication (or a public warning system indication) is not received. The access network device sends updated system information to the terminal device in the first BWP based on the first information. In other words, the terminal device feeds back, to the access network device, the first information indicating whether the system information update indication is received, so that the access network device may determine terminal devices that fail to receive the system information update indication, and send the updated system information to the terminal devices in a timely manner. The method is applicable to a system information update scenario.

According to the foregoing method, the access network device may determine, based on the first information from the terminal device, whether to send the updated system information to the terminal device, where the first information indicates whether the terminal device has received the system information update indication (or the public warning system indication) or the updated system information. The active BWP for the terminal device is the first BWP, and the first BWP does not include the CSS for the SIB. When the terminal device fails to receive the system information update indication (or the public warning system indication), or when the terminal device has received the system information update indication (or the public warning system indication) but has not yet successfully received the updated system information, the terminal device feeds back the first information to the access network device. Therefore, when the system information is updated, the access network device may determine, based on the first information, a terminal device that fails to receive the system information update indication (or the public warning system indication) or the updated system information in the first BWP, and provide services for the terminal device in a timely manner. User experience is improved.

In a possible implementation, the method further includes: The access network device sends the system information update indication in a second BWP within a first modification period MP, where the second BWP includes the CSS used to transmit the SIB. That the access network device receives first information from a terminal device in a first BWP includes: The access network device receives the first information from the terminal device in the first BWP within the first MP and/or a second MP, where the second MP is an MP following the first MP. That the access network device sends updated system information to the terminal device in the first BWP based on the first information includes: The access network device sends the updated system information to the terminal device in the first BWP within the second MP based on the first information. Alternatively, the second BWP may be replaced with a CORESET 0.

In a possible implementation, that the access network device receives first information from a terminal device in a first bandwidth part BWP includes: The access network device receives a radio resource control RRC establishment completion message or an RRC resumption completion message from the terminal device in the first BWP, where the RRC establishment completion message or the RRC resumption completion message includes the first information. The RRC establishment completion message or the RRC resumption completion message carries the first information, so that the access network device can send the updated system information to the terminal device in a timely manner. In this way, the terminal device does not miss reception of the system information in a random access procedure. Communication quality of the terminal device is improved.

In a possible implementation, that the access network device sends updated system information to the terminal device in the first BWP includes: The access network device sends the updated system information to the terminal device in the first BWP via dedicated signaling, or the access network device sends switching indication information to the terminal device in the first BWP, to indicate the terminal device to receive the updated system information in the second BWP, where the second BWP may be the CORESET 0. The terminal device may receive the updated system information faster via the dedicated signaling, and communication efficiency and user experience are improved. The system information can be sent to a plurality of terminal devices in the second BWP via the switching indication information, to improve resource utilization.

In a possible implementation, that the access network device sends updated system information to the terminal device in the first BWP based on the first information includes: The access network device sends a system information block 1 (SIB 1) to the terminal device in the first BWP based on the first information, where the SIB1 includes version information of the updated system information. The access network device receives a first request message from the terminal device, where the first request message is used to request the updated system information. The access network device sends the updated system information to the terminal device in the first BWP in response to the first request message. Based on the version information and the first request information, the terminal device may determine and feed back, depending on a service requirement, the receiving status of the system information update indication (the public warning system indication, or the updated system information), and the access network device may select the terminal devices that need to receive the updated system information in the first BWP, to send the updated system information to the terminal devices, without wasting additional transmission resources.

In a possible implementation, the terminal device is a reduced capability terminal device (RedCap UE). A bandwidth capability of the RedCap UE is small. Therefore, the access network device may separately configure a first BWP for the RedCap UE for communication. The first BWP may not include the SIB CSS and/or paging CSS. According to the communication method provided in this application, the updated system information can be sent to this type of terminal devices in a timely manner, to ensure normal communication of the terminal devices.

According to a fourth aspect, this application provides a communication method. The method is performed by a terminal device or a chip or a module in the terminal device. Herein, an example in which the terminal device is an execution body is used for description. The method includes: The terminal device sends first information to an access network device in a first BWP, where the first BWP is an active BWP for the terminal device, the first BWP does not include common search space CSS used to transmit a system information block SIB, and the first information indicates that a system information update indication (or a public warning system indication, or updated system information) is not received. The terminal device receives the updated system information from the access network device in the first BWP. In other words, the terminal device feeds back, to the access network device, the first information indicating whether the system information update indication (or the public warning system indication, or the updated system information) is received, so that the access network device may determine terminal devices that fail to receive the system information update indication (or the public warning system indication, or the updated system information), and send the updated system information to the terminal devices in a timely manner. The method is applicable to a system information update scenario.

According to the foregoing method, the terminal device may indicate, via the first information, whether the terminal device has received the system information indication (or the public warning system indication) or whether the terminal device has received the updated system information. The active BWP for the terminal device is the first BWP, and the first BWP does not include the CSS for the SIB. Therefore, when the system information is updated, the terminal device may indicate, to the access network device, that the terminal device fails to receive the system information update indication (or the public warning system indication) or the updated system information, so that the access network device provides services for the terminal device in a timely manner. In this way, the terminal device does not miss the updated system information, to avoid deterioration of communication quality. User experience is improved.

In a possible implementation, the method further includes: The terminal device initiates random access in the first BWP. That the terminal device determines whether a system information update indication is received includes: determining whether the system information update indication is received in a random access procedure. In other words, the first information may indicate whether the terminal device has received the system information indication (or the public warning system indication) or whether the terminal device has received the updated system information in the random access procedure, so that the access network device sends the updated system information in a timely manner. In this way, the terminal device does not miss reception of the updated system information in the random access procedure. User experience is improved.

In a possible implementation, that the terminal device sends first information to an access network device in a first BWP includes: The terminal device sends the first information to the access network device in the first BWP within a first MP. That the terminal device receives the updated system information from the access network device in the first BWP includes: The terminal device receives the updated system information from the access network device in the first BWP within a second MP, where the second MP is an MP following the first MP. Alternatively, the second BWP may be replaced with a CORESET 0.

In a possible implementation, the first information indicates whether the terminal device has received the system information update indication (or the public warning system indication), the first information indicates whether the terminal device needs to receive the updated system information, the first information indicates whether the terminal device has updated the system information, or the first information indicates whether the terminal device has received the updated system information. In other words, the first information may indicate a receiving status of the system information update indication of the terminal device, or may indicate a receiving status of the updated system information. Further, the access network device may determine, based on the first information, whether the updated system information needs to be sent to the terminal device.

In a possible implementation, that the terminal device sends first information to an access network device in a first BWP includes: The terminal device sends an RRC establishment completion message or an RRC resumption completion message to the access network device in the first BWP, where the RRC establishment completion message or the RRC resumption completion message includes the first information. In other words, it may be agreed in advance that the first information is carried in the RRC establishment completion message or the RRC resumption completion message. In this case, after receiving the RRC establishment completion message or the RRC resumption completion message, the access network device may determine whether the first information is included. Further, the access network device may determine, based on the first information, whether the updated system information needs to be sent to the terminal device, to improve communication quality of the terminal device.

In a possible implementation, that the terminal device receives the updated system information from the access network device in the first BWP includes: The terminal device receives the updated system information from the access network device in the first BWP via dedicated signaling, or the terminal device receives switching indication information from the access network device in the first BWP, where the switching indication information indicates the terminal device to receive the updated system information in the second BWP, and the second BWP may be the CORESET 0. The terminal device may receive the updated system information faster via the dedicated signaling, and communication efficiency and user experience are improved. The system information can be sent to a plurality of terminal devices in the second BWP via the switching indication information, to improve resource utilization.

In a possible implementation, that the terminal device receives the updated system information from the access network device in the first BWP includes: The terminal device receives a system information block 1 (SIB1) from the access network device in the first BWP, where the SIB1 includes version information of the updated system information. The terminal device sends a first request message to the access network device based on the version information of the updated system information, where the first request message is used to request the updated system information. The terminal device receives the updated system information from the access network device in the first BWP. Based on the version information and the first request information, the terminal device may determine and feed back, depending on a service requirement, the receiving status of the system information update indication (the public warning system indication, or the updated system information), and the access network device may select the terminal devices that need to receive the updated system information in the first BWP, to send the updated system information to the terminal devices, without wasting additional transmission resources.

In a possible implementation, the terminal device is a reduced capability terminal device (RedCap UE). A bandwidth capability of the RedCap UE is small. Therefore, the access network device may separately configure a first BWP for the RedCap UE for communication. The first BWP may not include the SIB CSS and/or paging CSS. According to the communication method provided in this application, the updated system information can be sent to this type of terminal devices in a timely manner, to ensure normal communication of the terminal devices.

According to a fifth aspect, this application provides a communication method. The method is performed by an access network device or a chip or a module in the access network device. Herein, an example in which the access network device is an execution body is used for description. The method includes: The access network device sends second information to a terminal device in a first BWP via dedicated signaling, where the second information indicates that system information is updated. The access network device receives third information from the terminal device, where the third information is used to request updated system information. The access network device sends the updated system information to the terminal device. The first BWP does not include CSS used to transmit a SIB or CSS used to transmit paging. The method is applicable to a system information update scenario.

According to the foregoing method, a terminal device working in the BWP that does not include the SIB CSS and/or the paging CSS may fail to receive the updated system information. The access network device may indicate, to at least one terminal device in the first BWP, via the second information, that the system information is updated. If determining, based on a service requirement, that the terminal device needs to receive the updated system information, the terminal device may send the third information to the access network device to request the updated system information. The access network device determines, based on the third information from the terminal device, the terminal device that needs to receive the updated system information, to send the system information to the terminal device in need, without wasting additional transmission resources. User experience of the terminal device is improved.

In a possible implementation, that the access network device sends the updated system information to the terminal device includes: The access network device sends a system information block 1 (SIB 1) to the terminal device in the first BWP, where the SIB 1 includes version information of the updated system information. The access network device receives a first request message from the terminal device, where the first request message is used to request the updated system information. The access network device sends the updated OSI to the terminal device in response to the first request message. Based on the version information and the first request information, the terminal device may determine and feed back, depending on a service requirement, the receiving status of the system information update indication (the public warning system indication, or the updated system information), and the access network device may select the terminal devices that need to receive the updated system information in the first BWP, to send the updated system information to the terminal devices, without wasting additional transmission resources.

In a possible implementation, that the access network device sends the updated system information to the terminal device includes: The access network device sends the updated system information to the terminal device in the first BWP via dedicated signaling. Alternatively, that the access network device sends the updated system information to the terminal device includes: The access network device sends indication information to the terminal device, where the indication information indicates the terminal device to receive the updated system information in a second BWP, and the second BWP includes the CSS used to transmit the SIB. The access network device sends the updated system information to the terminal device in the second BWP via the CSS. The second BWP may be a CORESET 0. The terminal device may receive the updated system information faster via the dedicated signaling, and communication efficiency and user experience are improved. The system information can be sent to a plurality of terminal devices in the second BWP via the switching indication information, to improve resource utilization.

In a possible implementation, the terminal device is a reduced capability terminal device (RedCap UE). A bandwidth capability of the RedCap UE is small. Therefore, the access network device may separately configure a first BWP for the RedCap UE for communication. The first BWP may not include the SIB CSS and/or paging CSS. According to the communication method provided in this application, the updated system information can be sent to this type of terminal devices in a timely manner, to ensure normal communication of the terminal devices.

According to a sixth aspect, this application provides a communication method. The method is performed by a terminal device or a chip or a module in the terminal device. Herein, an example in which the terminal device is an execution body is used for description. The method includes: The terminal device receives second information from an access network device in a first BWP, where the second information indicates that system information is updated. The terminal device sends third information to the access network device, where the third information is used to request updated system information. The terminal device receives the updated system information from the access network device, where the first BWP does not include CSS used to transmit a SIB and CSS used to transmit paging. The method is applicable to a system information update scenario.

According to the foregoing method, a terminal device working in the BWP that does not include the SIB CSS and/or the paging CSS may fail to receive the updated system information. When the first BWP does not include the CSS used to transmit the paging, the access network device may send, to the terminal device via dedicated signaling, a notification (namely, the second information) indicating that the system information is updated. The terminal device may determine, based on the second information from the access network device, that the system information is updated. If determining, based on a service requirement, that the terminal device needs to receive the updated system information, the terminal device may send the third information to the access network device to request the updated system information, to obtain required information in a timely manner. Communication quality is improved.

In a possible implementation, that the terminal device receives the updated system information from the access network device includes: The terminal device receives a system information block 1 (SIB1) from the access network device in the first BWP, where the SIB 1 includes version information of the updated system information. The terminal device sends a first request message to the access network device, where the first request message is used to request the updated system information. The terminal device receives the updated OSI from the access network device. Based on the version information and the first request information, the terminal device may determine and feed back, depending on a service requirement, the receiving status of the system information update indication (the public warning system indication, or the updated system information), and the access network device may select the terminal devices that need to receive the updated system information in the first BWP, to send the updated system information to the terminal devices, without wasting additional transmission resources.

In a possible implementation, that the terminal device receives the updated system information from the access network device includes: The terminal device receives the updated system information from the access network device in the first BWP via dedicated signaling. Alternatively, that the terminal device receives the updated system information from the access network device includes: The terminal device receives indication information from the access network device, where the indication information indicates the terminal device to receive the updated system information in a second BWP, and the second BWP includes the CSS used to transmit the SIB. The terminal device receives the updated system information from the access network device in the second BWP via the CSS. The second BWP may be a CORESET 0. The terminal device may receive the updated system information faster via the dedicated signaling, and communication efficiency and user experience are improved. The system information can be sent to a plurality of terminal devices in the second BWP via the switching indication information, to improve resource utilization.

In a possible implementation, the terminal device is a reduced capability terminal device (RedCap UE). A bandwidth capability of the RedCap UE is small. Therefore, the access network device may separately configure a first BWP for the RedCap UE for communication. The first BWP may not include the SIB CSS and/or paging CSS. According to the communication method provided in this application, the updated system information can be sent to this type of terminal devices in a timely manner, to ensure normal communication of the terminal devices.

According to a seventh aspect, this application provides a communication method. The method is performed by an access network device or a chip or a module in the access network device. Herein, an example in which the access network device is an execution body is used for description. The method includes: The access network device determines priority information, where the priority information indicates to prioritize reception of updated system information or to prioritize random access, or the priority information indicates a priority for receiving updated system information and/or a priority for random access. The access network device sends the priority information to the terminal device. The method is applicable to a system information update scenario.

According to the foregoing method, the access network device may send the priority information to the terminal device, to indicate the terminal device to prioritize reception of the updated system information. In this way, the terminal device does not miss reception of the system information in a random access procedure, to ensure that a service of the terminal device is normally performed. It should be noted that the communication method provided in the seventh aspect may be applied in combination with the method according to any one of the first aspect, the third aspect, and the fifth aspect, and any possible implementation of any one of the first aspect, the third aspect, and the fifth aspect.

According to an eighth aspect, this application provides a communication method. The method is performed by a terminal device or a chip or a module in the terminal device. Herein, an example in which the terminal device is an execution body is used for description. The method includes: The terminal device receives priority information from an access network device, where the priority information indicates to prioritize reception of updated system information or to prioritize random access, or the priority information indicates a priority for receiving updated system information and/or a priority for random access. The terminal device determines, based on the priority information, to prioritize reception of the updated system information or to prioritize random access. The method is applicable to a system information update scenario.

According to the foregoing method, the terminal device may determine, based on the priority information, to prioritize reception of the updated system information. In this way, the terminal device does not miss reception of the system information in a random access procedure, to ensure that a service of the terminal device is normally performed. It should be noted that the communication method provided in the eighth aspect may be applied in combination with the method according to any one of the second aspect, the fourth aspect, and the sixth aspect, and any possible implementation of any one of the second aspect, the fourth aspect, and the sixth aspect.

In a possible implementation, the priority information is predefined. For example, the first BWP is a first BWP that does not include the SIB CSS and/or the paging CSS. It is stipulated in advance that the terminal device working in the first BWP prioritizes reception of the updated system information when there is a conflict between performing a random access procedure by the terminal device and receiving system information by the terminal device. In this way, the terminal device does not fail to receive the updated system information, to avoid deterioration of communication quality. User experience is improved.

According to a ninth aspect, this application further provides a communication apparatus. The communication apparatus may implement the access network device in any method according to the first aspect, the third aspect, the fifth aspect, or the seventh aspect. The communication apparatus may be, for example, a base station, or a baseband apparatus in the base station. The communication apparatus may be implemented by hardware, or may be implemented by executing corresponding software by hardware. The hardware or the software includes one or more units or modules corresponding to the foregoing function.

In a possible implementation, the communication apparatus includes a processor. The processor is configured to support the communication apparatus to perform a corresponding function of the terminal device in the foregoing method. Optionally, the communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device, for example, an access network device.

In a possible implementation, the communication apparatus includes corresponding functional modules configured to implement the steps in the foregoing method. The function may be implemented by hardware, or may be implemented by executing corresponding software by hardware. The hardware or the software includes one or more modules corresponding to the foregoing function. For example, the communication apparatus includes a processing unit (sometimes referred to as a processing module) and a transceiver unit (sometimes referred to as a transceiver module). The units may perform corresponding functions in the foregoing method examples. For example, when the method according to the first aspect is implemented, the processing unit is configured to determine that first information from a terminal device is not received in a first BWP, and the transceiver unit is configured to send updated system information to the terminal device in the first BWP. For details, refer to descriptions for the method according to the first aspect, the third aspect, the fifth aspect, or the seventh aspect. Details are not described herein again.

According to a tenth aspect, this application further provides a communication apparatus. The communication apparatus may implement the access network device in any method according to the second aspect, the fourth aspect, the sixth aspect, or the eighth aspect. The communication apparatus may be, for example, a base station, or a baseband apparatus in the base station. The communication apparatus may be implemented by hardware, or may be implemented by executing corresponding software by hardware. The hardware or the software includes one or more units or modules corresponding to the foregoing function.

In a possible implementation, the communication apparatus includes a processor. The processor is configured to support the communication apparatus to perform a corresponding function of the terminal device in the foregoing method. Optionally, the communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device, for example, an access network device.

In a possible implementation, the communication apparatus includes corresponding functional modules configured to implement the steps in the foregoing method. The function may be implemented by hardware, or may be implemented by executing corresponding software by hardware. The hardware or the software includes one or more modules corresponding to the foregoing function. For example, the communication apparatus includes a processing unit (sometimes referred to as a processing module) and a transceiver unit (sometimes referred to as a transceiver module). The units may perform corresponding functions in the foregoing method examples. For example, when the method according to the second aspect is implemented, the processing unit is configured to determine whether a system information update indication is received, and the transceiver unit is configured to receive updated system information from an access network device in a first BWP. For details, refer to descriptions for the method according to the second aspect, the fourth aspect, the sixth aspect, or the eighth aspect. Details are not described herein again.

According to an eleventh aspect, a computer-readable storage medium is provided. The computer-readable storage medium stores a computer program or instructions. When the computer program or the instructions are run on a computer, the computer is enabled to implement the method according to any one of the first aspect to the eighth aspect and any possible implementation of any one of the first aspect to the eighth aspect.

According to a twelfth aspect, a computer program product storing computer-readable instructions is provided. When the computer-readable instructions are run on a computer, the computer is enabled to implement the method according to any one of the first aspect to the eighth aspect and any possible implementation of any one of the first aspect to the eighth aspect.

According to a thirteenth aspect, a chip system is provided. The chip system includes a processor, and may further include a memory. The processor is configured to execute a computer program or instructions stored in the memory, so that the chip system implements the method according to any one of the first aspect to the eighth aspect and any possible implementation of any one of the first aspect to the eighth aspect. The chip system may include a chip, or may include a chip and another discrete component.

According to a fourteenth aspect, a communication system is provided. The system includes the apparatus (for example, the access network device) according to the ninth aspect and the apparatus (for example, the terminal device) according to the tenth aspect.

### BRIEF DESCRIPTION OF DRAWINGS

FIG. 1 is a diagram of a network architecture applicable to an embodiment of this application;
FIG. 2A and FIG. 2B are diagrams of BWPs according to an embodiment of this application;
FIG. 3 is a schematic flowchart of a communication method according to an embodiment of this application;
FIG. 4A and FIG. 4B are diagrams of a communication method according to an embodiment of this application;
FIG. 5 is a schematic flowchart of another communication method according to an embodiment of this application;
FIG. 6 is a schematic flowchart of another communication method according to an embodiment of this application;
FIG. 7 is a diagram of a structure of a communication apparatus according to an embodiment of this application; and
FIG. 8 is a diagram of a structure of a communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

The following describes some terms in embodiments of this application, to help a person skilled in the art have a better understanding.
(1) Terminal device: A terminal device includes a device that provides a voice and/or data connectivity for a user, and specifically includes a device that provides a voice for the user, includes a device that provides data connectivity for the user, or includes a device that provides a voice and data connectivity for the user. For example, a handheld device with a wireless connection function or a processing device connected to a wireless modem may be included. The terminal device may communicate with a core network through a radio access network (radio access network, RAN), to exchange a voice or data through the RAN, or interact with the core network by exchanging a voice and data through the RAN. The terminal device may include user equipment (user equipment, UE), a wireless terminal device, a mobile terminal device, a device-to-device (device-to-device, D2D) communication terminal device, a vehicle-to-everything (vehicle-to-everything, V2X) terminal device, a machine-to-machine/machine type communications (machine-to-machine/machine type communications, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer having a mobile terminal device, or a portable, pocket-sized, hand-held, or a computer-embedded mobile apparatus. For example, the terminal device may be a device, for example, a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with low power consumption, a device with a limited storage capability, or a device with a limited computing capability. For example, the terminal device includes an information sensing device, for example, a bar code scanner, a radio frequency identification (radio frequency identification, RFID) device, a sensor, a global positioning system (global positioning system, GPS), or a laser scanner.

By way of example rather than limitation, in embodiments of this application, the terminal device may alternatively be a wearable device. If the terminal device is located on a vehicle (for example, placed in the vehicle or installed in the vehicle), the terminal device may be considered as a vehicle-mounted terminal device. For example, the vehicle-mounted terminal device is also referred to as an on-board unit (on-board unit, OBU).

In embodiments of this application, an apparatus configured to implement a function of the terminal device may be a terminal device, or may be an apparatus, for example, a chip system, that can support the terminal device to implement the function. The apparatus may be installed in the terminal device. In embodiments of this application, the chip system may include a chip, or may include a chip and another discrete component. In the technical solutions provided in embodiments of this application, an example in which the apparatus configured to implement the function of the terminal is a terminal device is used for describing the technical solutions provided in embodiments of this application.

The terminal device in this application may be a first-type terminal device or a second-type terminal device. Features distinguishing the first-type terminal device from the second-type terminal device may include at least one of the following:
1. Different bandwidth capabilities: For example, a bandwidth supported by the first-type terminal device is less than a bandwidth supported by the second-type terminal device, a maximum bandwidth capability of the first-type terminal device may be 20 MHz or 5 MHz, and a maximum bandwidth capability of the second-type terminal device may be 100 MHz.
2. Different quantities of receive and transmit antennas
3. Different maximum uplink transmit power: For example, maximum uplink transmit power supported by the first-type terminal device is less than maximum uplink transmit power supported by the second-type terminal device.
4. Different protocol versions: For example, the first-type terminal device may be a terminal device in NR release 17 (release-17, Rel-17) or in a version later than NR Rel-17. The second-type terminal device may be, for example, a terminal device in NR release 15 (release-15, Rel-15) or in NR release 16 (release-16, Rel-16). The second-type terminal device may also be referred to as an NR legacy (NR legacy) terminal device.
5. Different data processing capabilities: For example, a minimum latency between receiving downlink data by the first-type terminal device and sending feedback for the downlink data by the first-type terminal device is greater than a minimum latency between receiving downlink data by the second-type terminal device and sending feedback for the downlink data by the second-type terminal device, and/or a minimum latency between sending uplink data by the first-type terminal device and receiving feedback for the uplink data by the first-type terminal device is greater than a minimum latency between sending uplink data by the second-type terminal device and receiving feedback for the uplink data by the second-type terminal device.

In a possible implementation, the first-type terminal device may be a reduced capability (reduced capability, RedCap) terminal device, narrowband NR (narrowband NR, NB-NR) UE, or the like. The second-type terminal device may be a terminal device with a legacy capability, a normal capability, or a high capability, or may be referred to as a legacy (legacy) terminal device or a normal (normal) terminal device. The second-type terminal device and the first-type terminal device have but are not limited to the distinguishing features.

(2) Access network (access network, AN) device: An access network device, for example, a base station (for example, an access point), may be a device that communicates with a wireless terminal device through an air interface in one or more cells in an access network. Alternatively, the access network device is, for example, a road side unit (road side unit, RSU) in a vehicle-to-everything (vehicle-to-everything, V2X) technology. The base station may be configured to perform mutual conversion between a received over-the-air frame and an IP packet, to serve as a router between the terminal device and a remaining part of the access network. The remaining part of the access network may include an IP network. The RSU may be a fixed infrastructure entity supporting a V2X application, and may exchange a message with another entity supporting the V2X application. The access network device may further coordinate attribute management of an air interface. For example, the access network device may include an evolved NodeB (NodeB, eNB, or e-NodeB, evolved NodeB) in an LTE system or a long term evolution-advanced (long term evolution-advanced, LTE-A) system, may include a next generation NodeB (next generation NodeB, gNB) in a 5th generation (5th generation, 5G) mobile communication technology NR system (also referred to as an NR system for short), or may include a central unit (central unit, CU) and a distributed unit (distributed unit, DU) in a cloud access network (cloud radio access network, Cloud RAN) system. This is not limited in embodiments of this application.

In embodiments of this application, an apparatus configured to implement a function of the access network device may be an access network device, or may be an apparatus, for example, a chip system, that can support the access network device to implement the function, and the apparatus may be installed in the access network device. In the technical solutions provided in embodiments of this application, an example in which the apparatus configured to implement the function of the access network device is an access network device is used for describing the technical solutions provided in embodiments of this application.

### (3) System information (system information, SI)

The system information includes cell configuration information. The system information in NR mainly includes a master information block (master information block, MIB), a system information block (system information block, SIB), and a positioning system information block (positioning SIB, posSIB). In an NR standard protocol specification, 14 types of SIBs are defined, which are SIB1, SIB2, ..., and SIB 14 for short. Different system information has different functions. The SIB1 defines scheduling for other system information blocks and includes information required for initial access. The SIB2 includes cell re-selection information that mainly relates to a serving cell. The SIB3 includes information about serving frequencies and intrafrequency neighboring cells relevant for cell re-selection. The SIB4 includes information about other NR frequencies and inter-frequency neighboring cells relevant for cell re-selection. The SIB5 includes information about evolved universal terrestrial radio access (E-UTRA) frequencies and E-UTRA neighboring cells relevant for cell re-selection. The SIB6 includes an earthquake and tsunami warning system (ETWS) notification. The SIB7 includes an ETWS secondary notification. The SIB8 includes a commercial mobile alert system (CMAS) warning notification. The SIB9 includes information related to global positioning system (GPS) time and coordinated universal time (UTC).

The 13 types of SIBs other than SIB1 are also referred to as OSI (other system information). The SIB is transmitted via an SI message (SI message), and each SIB can be included in only one SI message. However, OSI or posSIBs with a same period may be included in a same SI message, are sent periodically.

### (4) Modification period (modification period, MP)

The modification period is also referred to as a change period. System information changes only in a specific frame. An MP boundary may be understood as a moment at which the system information changes. The system information does not change within a same MP. For example, after receiving a system information update indication within an MP 1, the terminal device may determine to receive updated system information in a next MP (MP 2).

### (5) System information update indication and public warning system indication

When the system information changes, the terminal device needs to re-read changed system information. Specifically, a base station transmits, within a current modification period, a short message (short message) via DCI for scheduling a paging (paging) message. The short message includes a system information update indication (system info Modification). The system information update indication occupies one bit (bit). After receiving the system information update indication within the current modification period, the terminal device learns that the system information is updated. Correspondingly, within a next modification period, the base station sends updated system information, and the terminal device receives and updates the system information. For ease of description, the DCI for scheduling the paging message is referred to as paging DCI for short in this application.

As mentioned above, the SIB 6, the SIB 7, and the SIB 8 mainly include information related to CMAS and ETWS. When notifications related to CMAS and ETWS need to be sent to the terminal device, in the access network device, an earthquake and tsunami warning systemcommercial mobile warning system indication (etwsAndCmasIndication) is included in the short message. In embodiments of this application, the etwsAndCmasIndication is referred to as a public warning system (public warning system, PWS) indication for short. The notifications related to CMAS and ETWS are referred to as PWS notifications.

The PWS notification differs from the system information update indication in that, when there are the PWS notification that needs to be sent, the access network device transmits the short message via the paging DCI. The short message includes the PWS indication (etwsAndCmasIndication), and the PWS notification is sent within a current modification period. The PWS indication occupies 1 bit (bit). After receiving the PWS indication, the terminal device learns that there is a PWS notification, receives the SIB1, and receives the PWS notification based on an SI scheduling message in the SIB1.

In other words, after receiving the system information update indication and the public warning system indication, the terminal device needs to receive the updated system information. The system information update indication is sent one MP earlier than updated system information corresponding to the system information update indication, and the public warning system indication and updated system information corresponding to the public warning system indication are sent within a same MP.

It should be noted that the updated system information (updated SI) means that new content is added to previous system information or content of the previous system information is modified. Therefore, both the system information corresponding to the system information update indication and the PWS notification corresponding to the public warning system indication may be understood as the updated system information. For ease of description, "updated system information" is uniformly used for description in this application.

### (6) Common search space (common search space, CSS)

The common search space includes a PDCCH transmission resource. The terminal device needs to monitor paging and system information. If sending a random access channel (random access channel, RACH), the terminal device further needs to receive a second message (Msg2) and a fourth message (Msg4). To demodulate the PDCCH, the terminal device needs to obtain time-frequency domain resource configuration information of the PDCCH. Currently, information such as frequency domain resource information of the PDCCH and a quantity of OFDM symbols occupied by the PDCCH in time domain is included in a CORESET, and information such as a starting OFDM symbol of the PDCCH, a monitoring period, and an associated CORESET is included in search space. Specifically, the CSS includes the following five types:

Type0-PDCCH CSS, equivalent to a CORESET 0, is configured by pdcch-configSIB 1 in MIB, or by searchSpaceSIB1 in PDCCH ConfigCommon. Scrambling code for cyclic redundancy code (cyclic redundancy code, CRC) is an SI-RNTI, and is used to configure transmission resources related to the SIB1.

Type0A-PDCCH CSS is configured by searchSpace-OSI in PDCCH Config-Common. Scrambling code for the CRC is an SI-RNTI, and is used to configure transmission resources associated with the OSI.

Type1-PDCCH CSS is configured by ra-SearchSpace in PDCCH ConfigCommon. Scrambling code for the CRC is a RA-RNTI or a TC-RNTI, and is used to configure transmission resources associated with the random access procedure.

Type2-PDCCH CSS is configured by paging Search Space in PDCCH ConfigCommon. Scrambling code for the CRC is a P-RNTI, and is used to configure transmission resources associated with paging (paging).

Type3-PDCCH CSS is configured by SearchSpace in PDCCH-Config (Dedicated) with searchSpaceType=common. Scrambling code for the CRC is an INT-RNTI, an SF-RNTI, a TPC-PUSCH-RNTI, a TPC-PUCCH-RNTI, or a TPC-SRS-RNTI, only for the primary cell, a C-RNTI, or CS-RNTI(s).

For ease of description, in this application, the Type0-PDCCH CSS and/or the Type0A-PDCCH CSS are/is referred to as SIB CSS for short, and the Type1-PDCCH CSS is referred to as paging CSS for short.

### (7) Reduced capability terminal (reduced capability UE, REDCAP UE)

The reduced capability terminal is also referred to as NR-light UE (NR-light UE) and is mainly used in industrial wireless sensors, video monitors, and wearable devices. For example, in the frequency range (FR) 1, a maximum bandwidth supported by the RedCap UE does not exceed 20 MHz. In the FR2, a maximum bandwidth supported by the RedCap UE does not exceed 100 MHz. As a service requirement changes, a maximum bandwidth supported by the RedCap UE may be 5 MHz. In addition, to reduce power consumption, the RedCap UE may support only one or two receive antennas, and does not support carrier aggregation or dual connectivity.

(8) Radio resource control (radio resource control, RRC) state: A terminal device has three RRC states: an RRC connected state, an RRC idle state, and an RRC inactive state.

RRC connected (connected) state: The terminal device establishes an RRC connection to a network, and data transmission can be performed.

RRC idle (idle) state: The terminal device does not establish an RRC connection to a network, and a base station does not store a context of the terminal device. If the terminal device needs to enter an RRC connected state from an RRC idle state, the terminal device needs to initiate an RRC connection establishment procedure.

RRC inactive state: Because the terminal device may be in a moving state, a base station on which the terminal device currently camps and an anchor base station of the terminal device may be the same base station, or may be different base stations. In comparison with the RRC connection establishment procedure, an RRC resume procedure has a shorter latency and less signaling overheads. However, the base station needs to store the context of the terminal device, and this may increase storage overheads of the base station.

### (9) Random access procedure

The random access procedure includes a contention-based random access procedure and a non-contention-based random access procedure. Currently, a contention-based random access procedure corresponding to a 4-step RACH is completed in four steps.

S 11: A terminal device sends a random access request message to an access network device, and starts a timer ra-ResponseWindow, and the access network device receives the random access request message from the terminal device. The random access request message may also be referred to as a first message (Msg1), and includes a random access preamble (preamble).

S12: The access network device sends a random access response (random access response, RAR) message to the terminal device, and the terminal device performs blind detection in the Type1-PDCCH CSS before the timer ra-ResponseWindow expires, and receives the RAR message from the access network device. The RAR message may also be referred to as a second message (Msg2).

S13: The terminal device sends a third message (Msg3) to the access network device based on scheduling information of the RAR message.

After receiving the RAR message, the terminal device waits for a fixed time interval, transmits the message based on scheduling of the RAR message, and starts a timer ra-ContentionResolutionTimer.

S14: The access network device sends contention resolution (contention resolution) information to the terminal device, where a message carrying the contention resolution information is referred to as a fourth message (Msg4). The terminal device performs blind detection in the Type1-PDCCH CSS before the timer ra-ContentionResolutionTimer expires, and may obtain the contention resolution information after receiving the Msg4 from the access network device.

The 4-step RACH is described above, and a 2-step RACH is described below. A contention-based random access procedure corresponding to the 2-step RACH is completed in two steps.

S21: A terminal device sends a message A (MsgA) to an access network device, and the access network device receives the MsgA from the terminal device.

The terminal device selects a MsgA resource from common MsgA resources broadcast by the access network device, and sends the MsgA through the MsgA resource. The MsgA resource includes a resource (time-frequency code) used to send a preamble and a corresponding physical uplink shared channel (physical uplink shared channel, PUSCH) resource. The MsgA also includes two parts: a preamble and a PUSCH payload (payload).

It may be considered that the MsgA message includes content included in the preamble and the Msg3 in the 4-step RACH.

S22: The access network device sends a message B (MsgB) to the terminal device, and the terminal device receives the MsgB from the access network device.

The MsgB may include contention resolution information, and may include content included in the RAR message in the 4-step RACH.

After random access is completed, the terminal device may send an RRC establishment completion message or an RRC resumption completion message to the access network device, where the RRC establishment completion message or the RRC resumption completion message may be understood as a Msg5.

In descriptions for embodiments of this application, "at least one" means one or more, and "a plurality of" means two or more. The term "and/or" describes an association relationship for describing associated objects and represents that three relationships may exist. For example, A and/or B may represent the following three cases: Only A exists, both A and B exist, and only B exists. A and B each may be singular or plural. The character "/" in this specification generally indicates an "or" relationship between the associated objects. "At least one of the following items (pieces)" or a similar expression thereof refers to any combination of these items (pieces), including any combination of a single item (piece) or a plurality of the items (pieces). For example, at least one of a, b, or c may indicate: a, b, c, a-b, a-c, b-c, or a-b-c, where a, b, and c may be singular or plural.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, first information and second information are information with different meanings, but do not indicate that the two types of information are different in content, priorities, sending sequences, importance, or the like.

The following describes in detail embodiments of this application with reference to the accompanying drawings of the specification.

The technical solutions provided in embodiments of this application are applicable to the fourth generation mobile communication technology (the 4th generation, 4G) system, for example, an NR system, or are further applicable to a next generation mobile communication system or another similar communication system. This is not specifically limited.

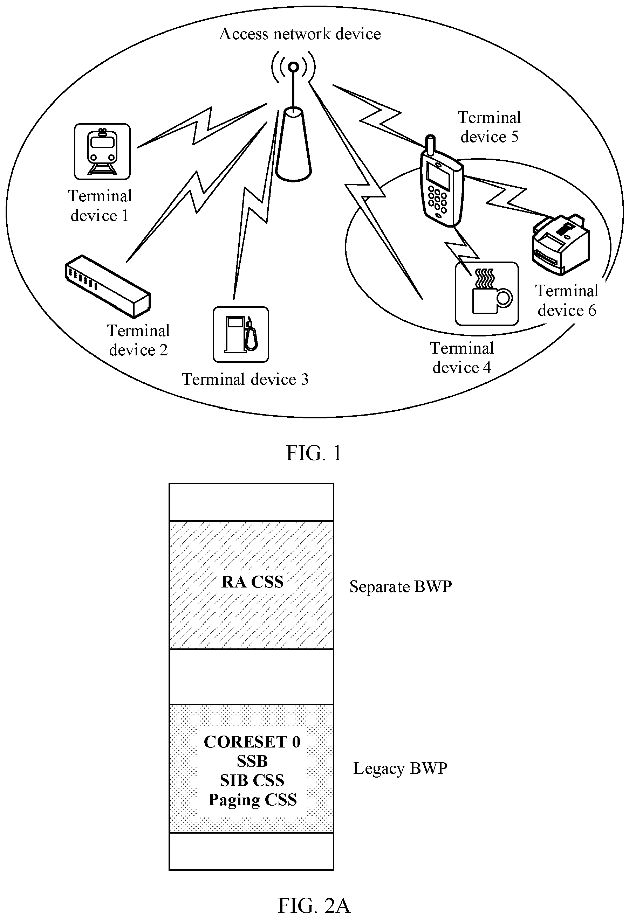

For ease of understanding of embodiments of this application, the following first uses a communication system shown in FIG. 1 as an example to describe in detail a communication system applicable to embodiments of this application. As shown in FIG. 1, a communication system may include an access network device and at least one terminal device. In the communication system, the access network device sends information to one or more of terminal devices 1 to 6. In addition, the terminal devices 4 to 6 may also form a communication system. In the communication system, the terminal device 5 may send information to one or more of the terminal device 4 and the terminal device 6.

In a communication system, if a terminal device fails to receive a system information update indication or a public warning system indication, the terminal device may miss updated system information. Consequently, communication quality is affected. For example, the terminal device may miss an updated cell re-selection parameter, resulting in an unsatisfactory cell re-selection result. For another example, when OSI information associated with a broadcast service is updated, the terminal device cannot receive the broadcast service based on updated SIB information. Service experience is affected. For another example, in the communication system, if the terminal device fails to receive the public warning system indication, the terminal device may miss reception of system information associated with public warning information. Consequently, the UE does not receive earthquake or commercial warning information in a timely manner, resulting in personal or property loss. There are many cases in which the terminal device fails to receive the system information update indication. For ease of understanding, the following three cases are used as examples for description in this application, but a scenario in which the problem occurs is not limited to the following three cases.

In a first case, when the terminal device performs random access, the access network device sends paging DCI, but the terminal device misses reception of the paging DCI because the terminal device needs to receive the Msg2 and the Msg4. Consequently, the terminal device fails to receive the system information update indication and/or the public warning system indication.

In a second case, an initial BWP of the terminal device is a BWP 1, and the BWP 1 does not include CSS used to receive paging. Therefore, the terminal device needs to receive paging DCI in another frequency domain resource BWP 2 (for example, a CORESET 0) through radio frequency tuning or frequency hopping. The paging DCI carries the system information update indication, but there is a specific latency in radio frequency tuning or frequency hopping. Therefore, the terminal device may miss the system information update indication sent in the BWP 2.

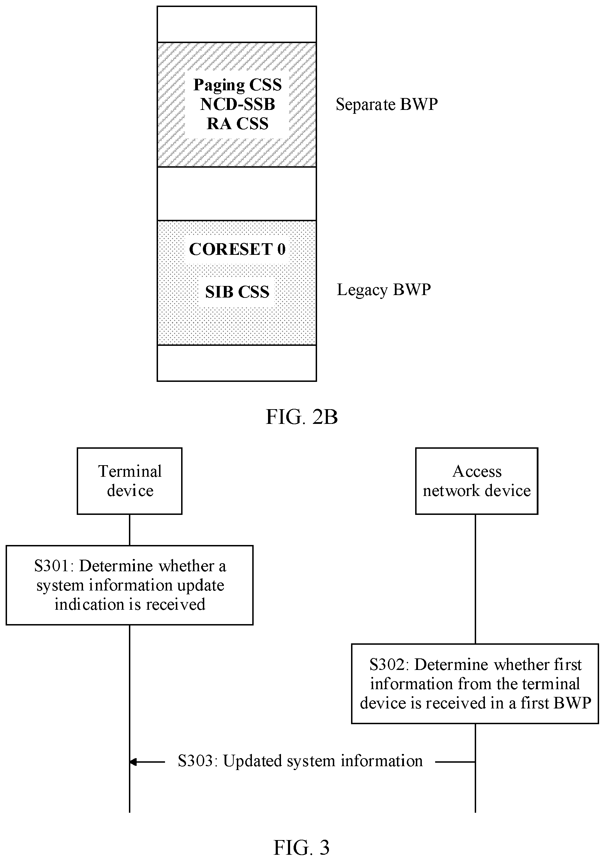

In a third case, as shown in FIG. 2A, the terminal device is RedCap UE. Because a maximum bandwidth of the RedCap UE is small, the access network device may configure a separate initial BWP (separate BWP) for this type of terminal device, so that a bandwidth of the separate BWP does not exceed the maximum bandwidth supported by the RedCap UE. The access network device configures a larger bandwidth for another piece of legacy UE. Requirements of two types of terminal devices are met. In other words, the separate BWP is an initial BWP configured separately from that of the legacy UE. Further, the separate BWP may not include the paging CSS and/or the SIB CSS. As shown in FIG. 2B, the separate BWP does not include the paging CSS and the SIB CSS. In this case, RedCap UE whose initial BWP is the separate BWP needs to receive the paging DCI and updated system information in the BWP of the legacy UE through radio frequency tuning or frequency hopping. A transmission conflict or frequency tuning latency may cause a failure to receive the system information update indication or a failure to receive the updated system information.

In view of this, the technical solutions in embodiments of this application are provided, to help the terminal device successfully receive the updated system information. Communication quality is improved.

In a communication method shown in FIG. 3, a terminal device may indicate, to an access network device, via first information, whether a system information update indication or a public warning system indication is received, where the first information may be implemented explicitly or implicitly. The access network device may, based on feedback from the terminal device indicating that the terminal device fails to receive the system information update indication or the public warning system indication, further send updated system information to the terminal device that fails to receive the system information update indication or the public warning system indication, to ensure communication quality of the terminal device, or to provide an emergency notification message in a timely manner. It should be understood that the communication method provided in an embodiment of this application is applicable to both the system information update indication and the public warning system indication. For ease of description, the following uses the system information update indication as an example for description. Unless otherwise specified, the "system information update indication" may be replaced with the "public warning system indication". The method includes steps S301 to S303.

S301: The terminal device determines whether the system information update indication is received.

S302: The access network device determines whether the first information from the terminal device is received in a first BWP.

S303: The access network device sends the updated system information to the terminal device, and correspondingly, the terminal device receives the updated system information from the access network device.

Optionally, before step S301, the method further includes step S300: The access network device sends a system information update indication in a second BWP.

The second BWP includes SIB CSS and paging CSS, and the system information update indication may be carried in paging DCI. Specifically, a terminal device UE 1 working in the first BWP successfully receives the system information update indication in the second BWP through radio frequency tuning, and a terminal device UE 2 working in the first BWP fails to receive the system information update indication. In the following, the two types of terminal devices UE 1 and UE 2 are used as examples for describing the solution in an embodiment of this application in detail.

The following describes in detail specific implementations of the foregoing steps S301 to S303.

In S301, the terminal device determines whether the system information update indication is received.

Further, the terminal device determines the first information based on whether the system information update indication is detected. For example, if the system information update indication is detected, the terminal device determines that the system information update indication is received, otherwise, the terminal device determines that the system information update indication is not received. The first information is information associated with system information update, or the first information is used for feedback about whether the system information update indication is received or whether the updated system information is received. When the terminal device has received the system information update indication or completes reception of the updated system information, the terminal device may indicate, to the access network device, via the first information, that the terminal device has received the system information update indication or completes reception of the updated system information. When the terminal device fails to receive the system information update indication or does not complete reception of the updated system information, the terminal device may also indicate, to the access network device, via the first information, that the terminal device fails to receive the system information update indication or does not complete reception of the updated system information. In a possible implementation, if the access network device sends, to the terminal device, the system information update indication carried in the paging DCI, but the terminal device fails to receive the paging DCI, the terminal device sends the first information to the access network device on a pre-agreed occasion, where the first information indicates that the terminal device does not complete reception of the updated system information. Therefore, when the terminal device misses detection of the paging DCI, the access network device may determine, based on the first information, a receiving status of the updated system information of the terminal device, to send the updated system information to the terminal device in a timely manner. Communication quality of the terminal device is ensured. The pre-agreed occasion may be a message in a random access procedure, for example, an RRC establishment completion message or an RRC resumption completion message.

Specifically, the terminal device may send the first information to explicitly indicate whether the system information update indication is received, or may implicitly indicate whether the system information update indication is received. The following describes the two indication manners in detail.

In the explicit indication manner, the first information indicates whether the system information update indication is received, or the first information indicates whether the updated system information needs to be received. Alternatively, the first information indicates whether the system information has been updated, or the first information indicates whether the updated system information is received. In other words, the first information may indicate a receiving status of the system information update indication of the terminal device, may indicate the receiving status of the updated system information, or may trigger sending of the updated system information. Further, the access network device may determine, based on the first information, whether the updated system information needs to be sent to the terminal device. Specifically, the first information may be a field or a bit. When a bit value is 0, it indicates that the system information update indication is not received. When a bit value is 1, it indicates that the system information update indication is received. The foregoing bit values are merely examples, or may be other predefined bit values. Specifically, it may be agreed in advance that the terminal device sends the first information after performing random access, where the first information indicates that the terminal device has received the system information update indication. For example, when determining that the system information update indication is received, the UE 1 may send the first information, to indicate that the system information update indication is received, or send the first information, to indicate that the UE 1 does not need to additionally receive updated system information. When determining that the system information update indication is not received, the UE 2 may indicate, via the first information, that the system information update indication is not received, or send the first information, to indicate that the UE 2 needs to additionally receive the updated system information. According to the explicit indication manner, the access network device may determine receiving statuses of the system information update indication of all terminal devices, and further send the updated system information to the terminal device that fails to receive the system information update indication. User experience is improved.

In the implicit indication manner, the first information indicates that the terminal device has received the system information update indication, the first information indicates that the terminal device does not need to receive the updated system information, the first information indicates that the system information has been updated, or the first information indicates that updated system information is received. In other words, the first information may indicate a receiving status of the system information update indication of the terminal device, or may indicate a receiving status of the updated system information. Further, the access network device may determine, based on the first information, whether the updated system information needs to be sent to the terminal device. Specifically, if determining that the system information update indication is received, the terminal device sends the first information to the access network device, or if determining that the system information update indication is not received, the terminal device does not send the first information or sends a first message that does not include the first information. For example, when determining that the system information update indication is received, the UE 1 may send the first information, to indicate that the system information update indication is received, or send the first information, to indicate that the UE 1 does not need to additionally receive updated system information. When determining that the system information update indication is not received, the UE 2 does not send the first information, or sends the first message that does not include the first information. For example, it is agreed in advance that the first information is sent via the first message. If the first message does not include the first information, it indicates that the terminal device fails to receive the system information update indication. After the access network device sends the system information update indication, if the access network device receives the first information from the UE 1, it may be considered that the UE 1 has received the system information update indication, or if the access network device fails to receive the first information from the UE 2, it may be considered that the UE 2 fails to receive the system information update indication. According to an embodiment of this application, the access network device may determine the receiving statuses of the system information update indication of all the terminal devices, and further send the updated system information to the terminal device that fails to receive the system information update indication. User experience is improved. In addition, the terminal device that fails to receive the system information update indication does not need to send feedback. Signaling consumption is reduced.

Further, in the foregoing implicit indication manner, it may be agreed in advance or pre-configured that only the terminal device in the first BWP needs to send the first information after receiving the system information update indication. For example, when the first BWP does not include the SIB CSS and/or the paging CSS, receiving statuses of the system information and the system information update indication of the terminal device need to be concerned. Therefore, it may be configured that, when working in the first BWP, the terminal device needs to send the first information to respond to the system information update indication. In this case, a terminal device working in another BWP does not require additional processing or consumption. Specifically, configuration information for the first BWP may include indication information, to indicate the terminal device in the first BWP to send the first information after receiving the system information update indication. Alternatively, it may be predefined that in a BWP that does not include the SIB CSS and/or the paging CSS, the terminal device needs to send the first information after receiving the system information update indication.

Specifically, the first information is sent in the first BWP, and the first information may be carried in the RRC establishment completion message or the RRC resumption completion message, or the first information may be carried in other dedicated signaling. In embodiments of this application, the dedicated signaling includes an RRC message, DCI, or a media access control control element (MAC CE). Details are not described below. For example, it may be predefined that a first field in the RRC establishment completion message or in the RRC resumption completion message indicates the first information. After establishing the RRC connection, the terminal device may send the first information via the RRC establishment completion message. In this case, if missing reception of the system information update indication in the random access procedure, the terminal device may quickly notify the access network device by using the method provided in this application, so that the access network device sends the updated system information to the terminal device in a timely manner, to ensure communication quality of the terminal device.

In S301, the terminal device may further determine whether the system information update indication is received within a first time period, and the first information may further indicate whether the terminal device has received the system information update indication within the first time period. In a possible implementation, the first time period is a random access procedure, and before S301, the method further includes: The terminal device initiates random access in a first BWP. That the terminal device determines whether the system information update indication is received includes: determining whether the system information update indication is received in the random access procedure. Further, the terminal device may send the first information via the RRC establishment completion message or the RRC resumption completion message. The first information may further indicate whether the terminal device has received the system information update indication in the random access procedure. In another possible implementation, the first time period is a first MP, and the terminal device determines whether the system information update indication is received within the first MP, and sends a first message that does not include the first information to the access network device within the first MP, where a second MP is an MP following the first MP. Further, the terminal device may receive the updated system information from the access network device in the first BWP within the first MP or the second MP. Specifically, for the system information update indication sent within the first MP, corresponding updated system information is sent within the next MP. For the public warning system indication sent within the first MP, a corresponding public warning system notification (carried in the SIB) is also sent within the same MP. The terminal device determines whether the system information update indication is received within the first time period, so that the terminal device may clearly indicate system information update corresponding to the first information. In this way, the access network device may send, to the terminal device, the updated system information required by the terminal device, to avoid wasting resources.

In S302, the access network device determines whether the first information from the terminal device is received in a first BWP.

Specifically, the access network device determines, based on whether the first information from the terminal device is detected in the first BWP, whether the first information is received.

In the explicit indication manner, before S302, the method further includes: The terminal device sends the first information to the access network device in the first BWP, and correspondingly, the access network device receives the first information from the terminal device in the first BWP. After receiving the first information from the terminal device, the access network device may further determine, based on the first information, whether the terminal device has received the system information update indication, or determine, based on the first information, whether the terminal device needs to receive the updated system information.

In the implicit indication manner, if the access network device determines that the first information from the terminal device is not received in the first BWP, the access network device may send the updated system information to the terminal device in S303. Alternatively, if the access network device determines that the first information from the terminal device is received in the first BWP, the access network device may not send the updated system information to the terminal device. For example, if the UE 1 has received the system information update indication, or has received the updated system information, the UE 1 sends the first information to the access network device, and the access network device does not need to send the updated system information to the UE 1. If the UE 2 fails to receive the system information update indication, or does not complete reception of the updated system information, the UE 2 does not send the first information to the access network device. The access network device determines that the first information from the UE 2 is not received in the first BWP. Further, in response to that the first information is not received, the access network device sends the updated system information to the UE 2 in the first BWP. It should be noted that "in response to" herein includes a direct implementation and an indirect implementation. In the first implementation, that the first information is not received is a sufficient condition for triggering the access network device to send the updated system information. For example, after determining that first information from UE 3 is not received, the access network device determines to send the updated system information to the UE 3. In the second implementation, after determining that the first information is not received, the access network device further determines, depending on another condition, whether the updated system information needs to be sent to the terminal device. For example, the access network device determines that first information from UE 4 is not received, and further, the access network device may further determine, based on a service requirement of the UE 4, whether the updated system information needs to be sent to the UE 4.

Further, the access network device may determine at least one terminal device that fails to receive the system information update indication and that works in the first BWP, to send the updated system information to the at least one terminal device. User experience of the terminal device is improved.

In S303, the access network device sends the updated system information to the terminal device, and correspondingly, the terminal device receives the updated system information from the access network device.

In the implicit indication manner, after determining that the first information from the terminal device is not received in the first BWP, the access network device may send the updated system information to the terminal device in the first BWP in response to that the first information is not received.

The first BWP does not include CSS used to transmit a SIB. The updated system information may be carried in dedicated signaling, and the updated system information is transmitted via the dedicated signaling. In this way, the updated system information may be sent to the terminal device in a BWP that does not include the SIB CSS. Communication quality of the terminal device is improved. Alternatively, when a large quantity of terminal devices need to receive the updated system information, the access network device may configure, in the first BWP, CSS for transmitting the SIB, to send the updated system information via the CSS. The access network device sends the updated system information to a plurality of terminal devices via broadcast messages, to save transmission resources.

Specifically, the access network device may send the updated system information to the terminal device in the first BWP via the dedicated signaling, or may send switching indication information to the terminal device in the first BWP. The switching indication information indicates the terminal device to receive the updated system information in the second BWP. Specifically, the switching indication information may include switching interval configuration information, for example, switching period information and switching duration information. After UE receives the switching indication information, where the switching indication information includes the switching period information and the switching duration information, the UE switches, based on the switching period information, from the first BWP to the second BWP to receive OSI, determines, based on the switching duration information, duration in which the UE receives the OSI in the second BWP, and switches back to the first BWP from the second BWP after the switching duration ends. Further, after switching back to the first BWP, the terminal device may send indication information to the access network device, where the indication information indicates that the switching interval configuration information no longer takes effect. The access network device may release the switching interval configuration information, so that the configuration of the terminal device is consistent with that of the access network device. When a large quantity of terminal devices need to receive the system information in the first BWP, the access network device may indicate the terminal device to switch to another resource to receive the updated system information. Specifically, when determining that the quantity of terminal devices that need to receive the updated system information exceeds a specific threshold, the access network device may send the switching indication information to the terminal device, to save transmission resources and improve communication efficiency. In a scenario in the presence of the PWS notification, all terminal devices can receive the notification in a timely manner.

It should be noted that the switching indication information is not only applicable to this embodiment, but also independently applicable to another scenario of receiving system information. For example, when the terminal device does not have a valid SIB, the terminal device needs to receive new OSI. For another example, the first BWP includes paging CSS, and RedCap UE in the connected state obtains the system information update indication (or the public warning system indication) via the paging CSS in the first BWP, and the RedCap UE in the connected state needs to switch to the second BWP to receive the system information via the SIB CSS.

In a possible implementation, when sending the updated system information, the access network device may further determine whether the terminal device needs to receive the updated system information. As described above, the system information includes 14 types. For each time of update, generally, only one or more types of SIBs are updated, and not all terminal devices need to receive an updated SIB each time. In this case, the access network device may notify the terminal device of a type of a SIB updated this time, to further determine which terminal devices need to receive the SIB updated this time. In other words, after determining that a terminal device that fails to receive the system information update indication is in a first set, the terminal device may further determine, based on a service type of a terminal device, that the terminal device to which the updated system information is sent is in a second set, where the second set is a subset of the first set. The access network device sends the updated system information to the terminal device in the second set, so that transmission resources of a communication system can be allocated based on a service requirement. Resource utilization is improved. It may be understood that S303 includes S3031 to S3033.

S3031: The access network device sends a system information block 1 (SIB1) to the terminal device in the first BWP in response to that the first information is not received, and correspondingly, the terminal device receives the SIB1 from the access network device in the first BWP. Specifically, the SIB1 is sent via dedicated signaling. The SIB1 includes version information of the updated system information, where the version information indicates a type of a SIB updated this time. For example, the version information may be a valuetag (valuetag). For another example, the version information may be a field, where each bit of the field corresponds to one type of SIB, and a state of each bit indicates whether a corresponding type of SIB is updated. The access network device may indicate, to the terminal device, via the version information, a type of the updated system information.

S3032: The terminal device sends first request information to the access network device, and correspondingly, the access network device receives the first request message from the terminal device, where the first request message is used to request the updated system information, or the first request information indicates that the terminal device needs to receive the updated system information. Before this step, the terminal device may determine a type of the updated SIB based on the version information in the SIB 1, and may further determine whether the terminal device needs to receive the updated system information. When determining that the terminal device needs to receive the updated system information, the terminal device may perform S3032, otherwise, the terminal device does not need to perform S3032.

S3033: The access network device sends the updated OSI to the terminal device in response to the first request message. Specifically, the access network device may send the updated OSI to the terminal device in the first BWP via the dedicated signaling.

In a possible implementation, the access network device sends the updated OSI to the terminal device in the first BWP. Specifically, the updated OSI may be sent via the dedicated signaling, or the updated OSI may be sent via the CSS.

In another possible implementation, the access network device sends switching indication information to the terminal device in the first BWP, where the switching indication information indicates the terminal device to receive the updated system information in the second BWP. For a specific meaning and a function of the switching indication information, refer to the foregoing detailed descriptions.

For example, the first BWP does not include the SIB CSS. In this case, the access network device may send the updated OSI via the dedicated signaling, or may send the switching indication information to the terminal device, to indicate the terminal device to receive the updated OSI in the second BWP. In this way, the terminal device in the first BWP for which no SIB CSS is configured can also receive the updated system information. Communication quality is ensured.

In S3031 to S3033, the access network device may further determine a terminal device that needs to receive the updated system information based on a service requirement, and send the updated system information to the terminal device that has the first request message, to avoid sending signaling to a terminal device that does not need to receive the updated SIB. In this way, signaling resources can be saved and service experience of the terminal device can be ensured.

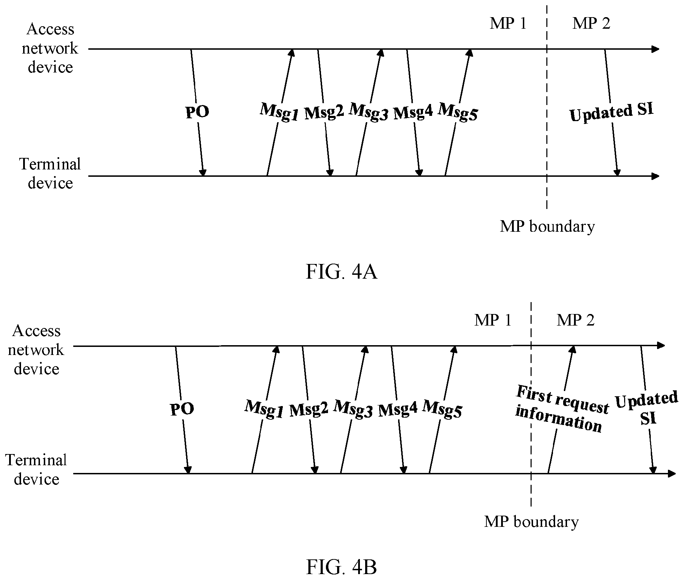

The system information update indication is sent one MP earlier than updated system information corresponding to the system information update indication, and the public warning system indication and updated system information (the public warning system notification) corresponding to the public warning system indication are sent within a same MP. Therefore, for the system information update indication, S301, S302, and S303 may be performed within different MPs, and for the public warning system indication, S301 to S303 may be performed within a same MP. Specifically, for the system information update indication, S301, S302, and S303 may be performed within different MPs. The updated system information is sent within an (n+1)^{th} modification period, and the first information is indicated within an n^{th} modification period, where n is a positive integer. As shown in FIG. 4A, within the MP 1, an access network device sends a system information update indication, and in a random access procedure, a terminal device fails to receive the system information update indication or does not complete reception of updated system information. Within the MP 2, the access network device sends updated system information to the terminal device in a second BWP, where the MP 2 is an MP following the MP 1. Further, the access network device may send the updated system information at an MP 2 boundary (or referred to as a start point of the MP 2), to send the updated system information to the terminal device as early as possible. Communication quality of the terminal device is improved. For S3032, as shown in FIG. 4B, the terminal device may send the first request message to the access network device within the MP 1 or the MP 2, and then the access network device sends the updated OSI to the terminal device.

In an embodiment of this application, the access network device may determine, based on the first information, terminal devices that need to receive the updated system information, and further send the updated system information to the terminal devices, to resolve a problem of low communication quality caused by a failure of the terminal device to receive the system information. Further, the access network device may further receive the first request information from the terminal device, to select a type of system information that the terminal devices need to receive. In this way, a small quantity of transmission resources is used for transmitting the updated system information.

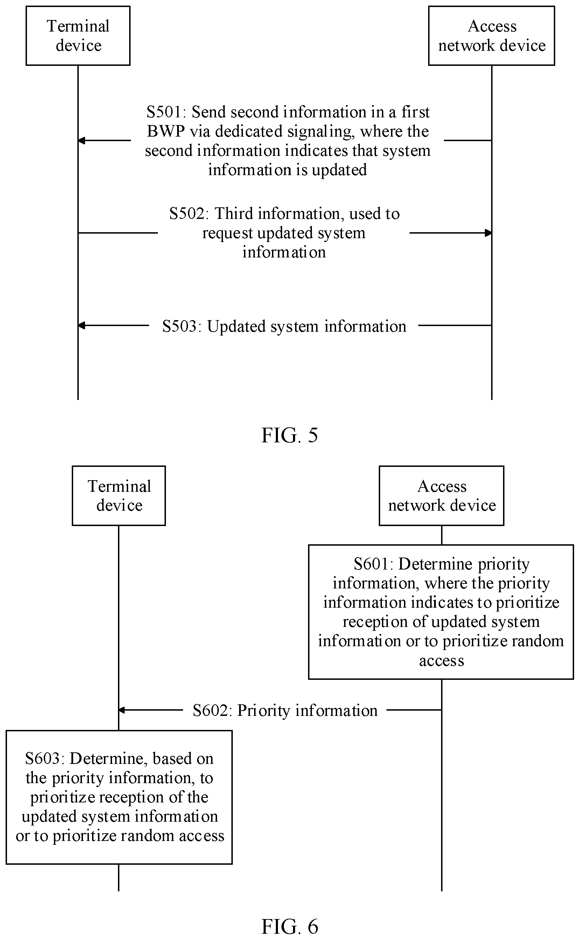

In a communication method shown in FIG. 5, a terminal device may send second information to all terminal devices in a first BWP, to indicate the terminal devices working in the first BWP that system information is updated. If a terminal device needs to receive updated system information, the terminal device may send third information to the access network device. The access network device may determine, based on the third information from the terminal device, the terminal device that fails to receive a system information update indication, and may further send the updated system information to the terminal device that fails to receive the system information update indication, to ensure communication quality of the terminal device. Specifically, the method includes steps S501 to S503.

S501: The access network device sends the second information to the terminal device in the first BWP via dedicated signaling, and correspondingly, the terminal device receives the second information from the access network device in the first BWP.

S502: The terminal device sends the third information to the access network device, and correspondingly, the access network device receives the third information from the terminal device, where the third information is used to request the updated system information.

S503: The access network device sends the updated system information to the terminal device, and correspondingly, the terminal device receives the updated system information from the access network device.

The following describes in detail specific implementations of steps S501 to S503.

In S501, the access network device sends the second information to the terminal device in the first BWP via dedicated signaling, and correspondingly, the terminal device receives the second information from the access network device in the first BWP.

The first BWP does not include CSS used to transmit a SIB or CSS used to transmit paging, and the second information indicates that the system information is updated, or indicates that the system information update indication has been sent.

In a possible implementation, the second information includes an update indication corresponding to at least one SIB type. For example, the second information is the system information update indication. For another example, the second information is version information. For a meaning, a function, and an example of the version information, refer to related descriptions in S3031. Because the first BWP does not include the CSS used to transmit the SIB and/or the CSS used to transmit the paging, the access network device may send the second information to the terminal device in the first BWP, to indicate that the system information has changed, so that the terminal device requests to receive the updated system information. User experience is ensured.

In another possible implementation, the second information indicates that the system information is updated within a first time period, or the system information update indication is sent within the first time period. Specifically, the first time period may be a time unit, or the first time period is an MP. For example, the access network device sends paging DCI in a second BWP within the first MP, where the paging DCI includes the system information update indication. The access network device may send the second information to the terminal device in the first BWP within the first MP or the second MP, to indicate that the system information update indication is sent within the first MP, where the second MP is an MP following the first MP. The terminal device may determine whether the system information update indication is received within the first MP, and further determine whether to request to receive the updated system information, to ensure communication quality of the terminal device.

Specifically, the second information is carried in dedicated signaling in the first BWP. For example, the access network device sends an RRC message to the terminal device, where the RRC message includes the second information. Therefore, the second information is different from the system information update indication sent via the paging DCI. The second information is sent via the dedicated signaling, so that the system information update indication may be sent in the first BWP that does not include the paging CSS. User experience of the terminal device is improved.

In S502, the terminal device sends the third information to the access network device, and correspondingly, the access network device receives the third information from the terminal device, where the third information is used to request the updated system information.

After receiving the second information, the terminal device may determine whether the terminal device needs to receive the updated system information. If the terminal device needs to receive the updated system information, the terminal device may send the third information to request the updated system information. Specifically, the third information may be carried in the dedicated signaling.

It should be noted that terminal devices that need to receive the updated system information include a terminal device that fails to receive the system information update indication and a terminal device that has received the system information update indication but has not yet successfully received the updated system information. In other words, the communication method provided in this application is applicable to a terminal device that fails to receive the updated system information due to different reasons, to ensure communication quality of the terminal device.

In S503, the access network device sends the updated system information to the terminal device, and correspondingly, the terminal device receives the updated system information from the access network device.

After receiving the second information from the terminal device, the access network device may send the updated system information to the terminal device. Specifically, the access network device may send the updated system information in the first BWP via the dedicated signaling, may additionally configure SIB CSS for sending the updated system information to a plurality of terminal devices, or may indicate the terminal device to receive the updated system information in the second BWP, in other words, sending the updated system information in the second BWP. For specific implementation of S503, refer to related descriptions in step S303.

In an embodiment of this application, through interaction between the second information and the third information, the access network device may determine a terminal device that needs to receive the updated system information, and send the updated system information to the terminal device, to ensure communication quality for a user.

The foregoing describes in detail that when a conflict occurs between receiving the system information by the terminal device and performing random access by the terminal device, the terminal device may fail to receive the updated system information. Therefore, embodiments of this application provide a communication method, to control, by setting priorities, the terminal device to first receive the updated system information or first perform random access. The access network device may configure priority information for the terminal device based on a service requirement, to ensure that a service of the terminal device is performed normally.

Specifically, the priority information may be predefined, or may be indicated via a message from the access network device.

In a predefined implementation, it may be defined in a protocol that a terminal device working in a BWP that does not include the SIB CSS and/or the paging CSS prioritizes reception of the system information. Specifically, when the terminal device needs to receive the system information in the random access procedure, the terminal device prioritizes reception of the updated system information. For example, it may be defined in the standard specification that if RedCap UE needs to receive the system information in the random access procedure in a separate BWP, the RedCap UE prioritizes reception of the updated system information.

In implementation of indication via a message, as shown in FIG. 6, the method may include steps S601 to S603.

S601: The access network device determines the priority information, where the priority information indicates to prioritize reception of the updated system information or to prioritize random access. Specifically, the priority information may include priority information about reception of the updated system information and/or priority information about random access.

S602: The access network device sends the priority information to the terminal device, and correspondingly, the terminal device receives the priority information from the access network device. In a possible implementation, a priority is included in configuration information of a first BWP.

S603: The terminal device determines, based on the priority information, to prioritize reception of the updated system information or to prioritize random access.

As described above, the terminal device may determine, based on the priority information, to prioritize reception of the updated system information. After receiving the updated system information, the terminal device may perform the following adjustments during random access. If time at which the terminal device receives paging DCI is denoted as T0:
(1) If T0 is before the Msg3, after receiving the updated system information, the terminal device does not need to additionally increase transmit power when sending the Msg 1 again. The terminal device may send the Msg1 based on initial transmit power, or send the Msg1 based on transmit power at which the Msg1 is sent last time.
   In a random access procedure, to enable the access network device to successfully receive the Msg1, if the terminal device fails to receive a response from the access network device after sending the Msg1 once, the terminal device increases transmit power and sends the Msg1 again. After the terminal device sends the Msg1 and before the terminal device sends the Msg3, if the terminal device receives the updated system information based on the priority information and thus fails to receive the Msg2 or fails to send the Msg3, the terminal device performs random access again after receiving the updated system information. In this case, the terminal device does not need to additionally increase the transmit power, and may send the Msg1 based on the transmit power at which the Msg1 is sent last time, or send the Msg1 based on the initial transmit power. Energy consumption of the terminal device can be reduced.
(2) If T0 is after the Msg3 and before the Msg4, the terminal device needs to pause or stop a related timer, for example, a T300 timer or a T319 timer.

When the terminal device prioritizes reception of the updated system information based on the priority information, and then returns to continue the random access procedure, the timer may expire. When the T300 expires, the terminal device performs RLC entity re-establishment and MAC reset (MAC reset). When the T319 expires, the terminal device enters the RRC idle state. In an embodiment of this application, if the terminal device cannot receive the Msg4 when continuing the random access procedure, the terminal device may perform random access again, but does not need to perform RLC entity re-establishment and MAC reset again in this case, to avoid unnecessary consumption.

The foregoing method for setting the priorities may be separately applied, or may be applied in combination with another communication method provided in this application, to better control a communication system based on a service requirement.

The foregoing embodiments may be separately implemented, or may be implemented in combination with each other. In the foregoing, in different embodiments, differences between embodiments are described in detail. Except for other content of the differences, for other content between different embodiments, reference may be made to each other. The step numbers of each flowchart described in embodiments are merely a procedure execution example, and do not constitute a limitation on a step execution sequence. In embodiments of this application, there is no strict execution sequence between steps having no time sequence dependence relationship with each other. In addition, not all steps shown in each flowchart are necessarily performed steps, and some steps may be added or deleted based on each flowchart according to an actual requirement.

In the foregoing embodiments provided in this application, the method provided in embodiments of this application is described from a perspective of interaction between devices. To implement the functions in the methods provided in embodiments of this application, the access network device or the terminal device may each include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In embodiments of this application, module division is an example, and is merely a logical function division. In actual implementation, another division manner may be used. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

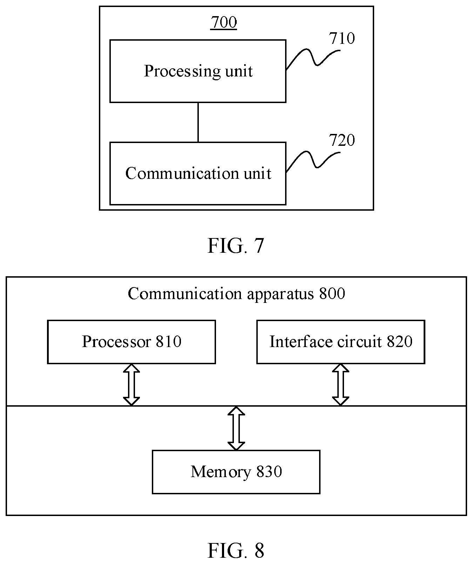

Same as the foregoing concept, as shown in FIG. 7, an embodiment of this application further provides an apparatus 700, configured to implement a function of the access network device or the terminal device in the foregoing methods. For example, the apparatus may be a software module or a chip system. In embodiments of this application, the chip system may include a chip, or may include a chip and another discrete component. The apparatus 700 may include a processing unit 710 and a communication unit 720.

In embodiments of this application, the communication unit may also be referred to as a transceiver unit, and may include a sending unit and/or a receiving unit, which are respectively configured to perform sending and receiving steps of the access network device or the terminal device in the foregoing method embodiments.

The following describes in detail communication apparatuses provided in embodiments of this application with reference to FIG. 7 and FIG. 8. It should be understood that descriptions of apparatus embodiments correspond to the descriptions of the method embodiments. Therefore, for content that is not described in detail, refer to the method embodiments. For brevity, details are not described herein again.

The communication unit may also be referred to as a transceiver, a transceiver machine, a transceiver apparatus, or the like. The processing unit may also be referred to as a processor, a processing board, a processing module, a processing apparatus, or the like. Optionally, a component that is in the communication unit 720 and that is configured to implement a receiving function may be considered as a receiving unit, and a component that is in the communication unit 720 and that is configured to implement a sending function may be considered as a sending unit. In other words, the communication unit 720 includes the receiving unit and the sending unit. The communication unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

When the communication apparatus 700 performs a function of the terminal device in the procedure shown in FIG. 3 in the foregoing embodiment,
the processing unit is configured to determine whether a system information update indication is received, and
the communication unit is configured to receive updated system information from an access network device.

In a possible implementation, the processing unit is configured to determine whether the system information update indication is received. If the system information update indication is not received, the processing unit sends, by using the communication unit, a first message that does not include first information to the access network device, where the first message that does not include the first information is used to trigger sending of the updated system information in a first bandwidth part BWP.

The communication unit receives the updated system information from the access network device in the first BWP, where the first BWP is an active BWP for the terminal device, the first BWP does not include common search space CSS used to transmit a system information block SIB, and the first information is information associated with system information update.

In a possible implementation, the communication unit is further configured to initiate random access in the first BWP.

That the processing unit determines whether a system information update indication is received includes: determining whether the system information update indication is received in a random access procedure.

In a possible implementation, that the processing unit determines whether a system information update indication is received includes: determining whether the system information update indication is received within a first modification period MP.

That the communication unit sends a first message that does not include first information to the access network device includes: The first message that does not include the first information is sent to the access network device within the first MP or a second MP, where the second MP is an MP following the first MP.

In a possible implementation, the first information indicates that the terminal device has received the system information update indication, or the first information indicates that the terminal device does not need to receive the updated system information.

In a possible implementation, the first message is an RRC establishment completion message or an RRC resumption completion message.

In a possible implementation, that the communication unit receives the updated system information from the access network device in the first BWP includes: receiving the updated system information from the access network device in the first BWP via dedicated signaling.

In a possible implementation, the communication unit is further configured to receive a system information block 1 from the access network device in the first BWP, where the system information block 1 includes version information of the updated system information.

The processing module is further configured to send a first request message to the access network device based on the version information of the updated system information, where the first request message is used to request the updated system information, and the processing module is further configured to receive the updated system information from the access network device in the first BWP.

When the communication apparatus 700 performs a function of the access network device in the procedure shown in FIG. 3 in the foregoing embodiment,
the processing unit is configured to determine whether first information from a terminal device is received in a first BWP, and
the communication unit is configured to send updated system information to the terminal device.

The first BWP is an active BWP for the terminal device, the first BWP does not include common search space CSS used to transmit a system information block SIB, and the first information is information associated with system information update.

In a possible implementation, the processing unit is configured to determine that the first information from the terminal device is not received in the first bandwidth part BWP, where the first BWP is the active BWP for the terminal device, the first BWP does not include the common search space CSS used to transmit the system information block SIB, and the first information is the information associated with system information update.

The processing unit sends, by using the communication unit, the updated system information to the terminal device in the first BWP in response to that the first information is not received.

In a possible implementation, the communication unit is further configured to send a system information update indication in a second BWP within a first modification period MP, where the second BWP includes the CSS used to transmit the SIB.

That the processing unit determines that the first information from the terminal device is not received in the first BWP includes: The processing unit determines that the first information is not received within the first MP and/or the second MP, where the second MP is an MP following the first MP.

That the communication unit sends updated system information to the terminal device in the first BWP includes: The communication unit sends the updated system information to the terminal device in the first BWP within the second MP.

In a possible implementation, the first information indicates that the terminal device has received the system information update indication, or the first information indicates that the terminal device does not need to receive the updated system information.

In a possible implementation, the communication unit is further configured to receive a radio resource control RRC establishment completion message or an RRC resumption completion message from the terminal device in the first BWP; and

That the processing unit determines that the first information from the terminal device is not received in the first BWP includes: The processing unit determines that the RRC establishment completion message or the RRC resumption completion message does not include the first information.

In a possible implementation, that the communication unit sends updated system information to the terminal device in the first BWP includes:

The communication unit sends the updated system information to the terminal device in the first BWP via dedicated signaling.

In a possible implementation, that the communication unit sends the updated system information to the terminal device in the first BWP in response to that the first information is not received includes:
the communication unit sends a system information block 1 to the terminal device in the first BWP in response to that the first information is not received, where the system information block 1 includes version information of the updated system information.

The communication unit receives a first request message from the terminal device, where the first request message is used to request the updated system information.

The communication unit sends the updated system information to the terminal device in the first BWP in response to the first request message.

The foregoing is merely an example. The processing unit 710 and the communication unit 720 may further perform other functions, for example, sending the first information in an explicit indication manner. For more detailed descriptions, refer to related descriptions in the method embodiment shown in FIG. 3. Details are not described herein again.

The communication apparatus 700 may further perform the method shown in FIG. 5 or FIG. 6. Details are not described herein again.

FIG. 8 shows an apparatus 800 according to an embodiment of this application. The apparatus shown in FIG. 8 may be implemented by a hardware circuit of the apparatus shown in FIG. 7. The communication apparatus is applicable to the foregoing flowcharts, and performs the functions of the terminal device or the access network device in the foregoing method embodiments. For ease of description, FIG. 8 shows only main components of the communication apparatus.

As shown in FIG. 8, a communication apparatus 800 includes a processor 810 and an interface circuit 820. The processor 810 and the interface circuit 820 are coupled to each other. It may be understood that the interface circuit 820 may be a transceiver, a pin, an interface circuit, or an input/output interface. Optionally, the communication apparatus 800 may further include a memory 830, configured to store instructions executed by the processor 810, or store input data required by the processor 810 to run the instructions, or store data generated after the processor 810 runs the instructions.

When the communication apparatus 800 is configured to implement the method shown in FIG. 3, the processor 810 is configured to implement the function of the processing unit 710, and the interface circuit 820 is configured to implement the function of the communication unit 720.

The communication apparatus 800 may further perform the method shown in FIG. 5 or FIG. 6. Details are not described herein again.

When the communication apparatus is a chip used in a terminal device, the chip in the terminal device implements the function of the terminal device in the foregoing method embodiments. The chip in the terminal device receives information from another module (for example, a radio frequency module or an antenna) in the terminal device, where the information is sent by an access network device to the terminal device. Alternatively, the chip in the terminal device sends information to another module (for example, a radio frequency module or an antenna) in the terminal device, where the information is sent by the terminal device to an access network device.

When the communication apparatus is a chip used in an access network device, the chip in the access network device implements the function of the access network device in the foregoing method embodiments. The chip in the access network device receives information from another module (for example, a radio frequency module or an antenna) in the access network device, where the information is sent by a terminal device to the access network device. Alternatively, the chip in the access network device sends information to another module (for example, a radio frequency module or an antenna) in the access network device, where the information is sent by the access network device to a terminal device.

It may be understood that, the processor in embodiments of this application may be a central processing unit, or may be another general-purpose processor, a digital signal processor, an application-specific integrated circuit, or another programmable logic device, a transistor logic device, a hardware component, or any combination thereof. The general purpose processor may be a microprocessor or any regular processor or the like.

The memory in embodiments of this application may be a random access memory, a flash memory, a read-only memory, a programmable read-only memory, an erasable programmable read-only memory, an electrically erasable programmable read-only memory, a register, a hard disk drive, a removable hard disk drive, or a storage medium of any other form well-known in the art.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer programs instructions may be used to implement each procedure and/or each block in the flowcharts and/or the block diagrams and a combination of procedures and/or blocks in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application without departing from the scope of this application. This application is intended to cover these modifications and variations provided that they fall within the scope of protection defined by the following claims and their equivalent technologies.

## Claims

1. A communication method, wherein the method comprises:
determining, by an access network device, that first information from a terminal device is not received in a first bandwidth part BWP, wherein the first BWP is an active BWP for the terminal device, the first BWP does not comprise common search space CSS used to transmit a system information block SIB, and the first information is information associated with system information update; and
sending, by the access network device, updated system information to the terminal device in the first BWP in response to that the first information is not received.

2. The communication method according to claim 1, wherein
the method further comprises: sending a system information update indication in a second BWP within a first modification period MP, wherein the second BWP comprises the CSS used to transmit the SIB;
the determining, by an access network device, that first information from a terminal device is not received in a first BWP comprises: determining, by the access network device, that the first information is not received within the first MP and/or a second MP, wherein the second MP is an MP following the first MP; and
the sending, by the access network device, updated system information to the terminal device in the first BWP comprises: sending, by the access network device, the updated system information to the terminal device in the first BWP within the second MP.

3. The communication method according to claim 1 or 2, wherein
the first information indicates that the terminal device has received the system information update indication; or
the first information indicates that the terminal device does not need to receive the updated system information.

4. The communication method according to any one of claims 1 to 3, wherein
the method further comprises: receiving, by the access network device, a radio resource control RRC establishment completion message or an RRC resumption completion message from the terminal device in the first BWP; and
the determining, by an access network device, that first information from a terminal device is not received in a first BWP comprises: determining that the RRC establishment completion message or the RRC resumption completion message does not comprise the first information.

5. The communication method according to any one of claims 1 to 4, wherein the sending, by the access network device, updated system information to the terminal device in the first BWP in response to that the first information is not received comprises:
sending, by the access network device, a system information block 1 to the terminal device in the first BWP in response to that the first information is not received, wherein the system information block 1 comprises version information of the updated system information;
receiving, by the access network device, a first request message from the terminal device, wherein the first request message is used to request the updated system information; and
sending, by the access network device, the updated system information to the terminal device in the first BWP in response to the first request message.

6. The communication method according to any one of claims 1 to 5, wherein the sending, by the access network device, updated system information to the terminal device in the first BWP comprises:
sending, by the access network device, the updated system information to the terminal device in the first BWP via dedicated signaling.

7. The communication method according to any one of claims 1 to 6, wherein the terminal device is a reduced capability terminal device.

8. A communication method, wherein the method comprises:
determining, by a terminal device, whether a system information update indication is received;
if the terminal device fails to receive the system information update indication, sending, a first message that does not comprise first information to an access network device, wherein the first message that does not comprise the first information is used to trigger sending of updated system information in a first bandwidth part BWP; and
receiving, by the terminal device, the updated system information from the access network device in the first BWP, wherein
the first BWP is an active BWP for the terminal device, the first BWP does not comprise common search space CSS used to transmit a system information block SIB, and the first information is information associated with system information update.

9. The communication method according to claim 8, wherein
the method further comprises: initiating, by the terminal device, random access in the first BWP; and
the determining, by a terminal device, whether a system information update indication is received comprises: determining whether the system information update indication is received in a random access procedure.

10. The communication method according to claim 8, wherein
the determining, by a terminal device, whether a system information update indication is received comprises: determining, by the terminal device, whether the system information update indication is received within a first modification period MP;
the sending, a first message that does not comprise first information to an access network device comprises: sending the first message that does not comprise the first information to the access network device within the first MP or a second MP, wherein the second MP is an MP following the first MP; and
the receiving, by the terminal device, the updated system information from the access network device in the first BWP comprises: receiving, by the terminal device, the updated system information from the access network device in the first BWP within the second MP.

11. The communication method according to any one of claims 8 to 10, wherein
the first information indicates that the terminal device has received the system information update indication; or
the first information indicates that the terminal device does not need to receive the updated system information.

12. The communication method according to any one of claims 8 to 11, wherein the first message is an RRC establishment completion message or an RRC resumption completion message.

13. The communication method according to any one of claims 8 to 12, wherein
the receiving, by the terminal device, the updated system information from the access network device in the first BWP comprises:
receiving, by the terminal device, the updated system information from the access network device in the first BWP via dedicated signaling.

14. The communication method according to any one of claims 8 to 13, wherein the method further comprises:
receiving, by the terminal device, a system information block 1 from the access network device in the first BWP, wherein the system information block 1 comprises version information of the updated system information; and
sending, by the terminal device, a first request message to the access network device based on the version information of the updated system information, wherein the first request message is used to request the updated system information.

15. The communication method according to any one of claims 8 to 14, wherein the terminal device is a reduced capability terminal device.

16. A communication apparatus, wherein the apparatus comprises:
a processing unit, configured to determine that first information from a terminal device is not received in a first bandwidth part BWP, wherein the first BWP is an active BWP for the terminal device, the first BWP does not comprise common search space CSS used to transmit a system information block SIB, and the first information is information associated with system information update; and
a communication unit, configured to send updated system information to the terminal device in the first BWP in response to that the first information is not received.

17. The communication apparatus according to claim 16, wherein
the communication unit is further configured to send a system information update indication in a second BWP within a first modification period MP, wherein the second BWP comprises the CSS used to transmit the SIB;
the processing unit is specifically configured to determine that the first information is not received within the first MP and/or a second MP, wherein the second MP is an MP following the first MP; and
the communication unit is further configured to send the updated system information to the terminal device in the first BWP within the second MP.

18. The communication apparatus according to claim 16 or 17, wherein
the first information indicates that the terminal device has received the system information update indication; or
the first information indicates that the terminal device does not need to receive the updated system information.

19. The communication apparatus according to any one of claims 16 to 18, wherein
the communication unit is further configured to receive a radio resource control RRC establishment completion message or an RRC resumption completion message from the terminal device in the first BWP; and
the processing unit is specifically configured to determine that the RRC establishment completion message or the RRC resumption completion message does not comprise the first information.

20. The communication apparatus according to any one of claims 16 to 19, wherein
the communication unit is specifically configured to: send a system information block 1 to the terminal device in the first BWP in response to that the first information is not received, wherein the system information block 1 comprises version information of the updated system information;
receive a first request message from the terminal device, wherein the first request message is used to request the updated system information; and
send the updated system information to the terminal device in the first BWP in response to the first request message.

21. The communication apparatus according to any one of claims 16 to 20, wherein
the communication unit is specifically configured to send the updated system information to the terminal device in the first BWP via dedicated signaling.

22. The communication apparatus according to any one of claims 16 to 21, wherein the terminal device is a reduced capability terminal device.

23. A communication apparatus, wherein the apparatus comprises:
a processing unit, configured to determine whether a system information update indication is received; and
a communication unit, wherein if a terminal device fails to receive the system information update indication, the communication unit is configured to send a first message that does not comprise first information to an access network device, and the first message that does not comprise the first information is used to trigger sending of updated system information in a first bandwidth part BWP, wherein
the communication unit is further configured to receive the updated system information from the access network device in the first BWP, wherein
the first BWP is an active BWP for the terminal device, the first BWP does not comprise common search space CSS used to transmit a system information block SIB, and the first information is information associated with system information update.

24. The communication apparatus according to claim 23, wherein
the communication unit is further configured to initiate random access in the first BWP; and
the processing unit is specifically configured to determine whether the system information update indication is received in a random access procedure.

25. The communication apparatus according to claim 23, wherein
the processing unit is specifically configured to determine whether the system information update indication is received within a first modification period MP; and
the communication unit is specifically configured to: send the first message that does not comprise the first information to the access network device within the first MP or a second MP, wherein the second MP is an MP following the first MP; and receive the updated system information from the access network device in the first BWP within the second MP.

26. The communication apparatus according to any one of claims 23 to 25, wherein
the first information indicates that the terminal device has received the system information update indication; or
the first information indicates that the terminal device does not need to receive the updated system information.

27. The communication apparatus according to any one of claims 23 to 26, wherein the first message is an RRC establishment completion message or an RRC resumption completion message.

28. The communication apparatus according to any one of claims 23 to 27, wherein
the communication unit is specifically configured to receive the updated system information from the access network device in the first BWP via dedicated signaling.

29. The communication apparatus according to any one of claims 23 to 28, wherein
the communication unit is further configured to receive a system information block 1 from the access network device in the first BWP, wherein the system information block 1 comprises version information of the updated system information; and
the communication unit is further configured to send a first request message to the access network device based on the version information of the updated system information, wherein the first request message is used to request the updated system information.

30. The communication apparatus according to any one of claims 23 to 29, wherein the communication apparatus is a reduced capability terminal device.

31. A communication apparatus, comprising a processor and a memory, wherein the memory is configured to store one or more computer programs, and when the one or more computer programs are run, the method according to any one of claims 1 to 7 is performed.

32. A communication apparatus, comprising a processor and a memory, wherein the memory is configured to store one or more computer programs, and when the one or more computer programs are run, the method according to any one of claims 8 to 15 is performed.

33. A computer-readable storage medium, wherein the computer-readable storage medium is configured to store a computer program, and when the computer program is run on a computer, the computer is enabled to perform the method according to any one of claims 1 to 7, or the computer is enabled to perform the method according to any one of claims 8 to 15.
